# EUROPÄISCHE PATENTSCHRIFT

(11) **EP 0 692 082 B1**
(45) Veröffentlichungstag und Bekanntmachung des Hinweises auf die Patenterteilung: **05.04.2000**
(21) Anmeldenummer: 95905514.6
(22) Anmeldetag: 20.01.1995
(51) Int. Cl.: F16L 49/04, F16J 15/10, F16L 23/16

(54) **Ringförmige Dichtung und Verfahren zur Herstellung**
Annular sealing and procedure for manufacture
Garniture et procédure pour la fabrication

(30) Priorität: 20.01.1994 CH 17394; 21.03.1994 CH 83194; 22.11.1994 CH 351394
(43) Veröffentlichungstag der Anmeldung: 17.01.1996
(73) Patentinhaber: Schneider, Fritz, 4312 Magden (CH)
(72) Erfinder: Schneider, Fritz, 4312 Magden (CH)
(74) Vertreter: Braun, André, jr.
(86) Internationale Anmeldenummer: CH9500013
(87) Internationale Veröffentlichungsnummer: WO9520124

(56) Entgegenhaltungen:
- DD-A- 261 195
- DE-A- 3 623 008
- FR-A- 1 531 499
- GB-A- 834 853
- GB-A- 903 409
- US-A- 2 580 546
- US-A- 3 977 709
- US-A- 5 082 297

## Beschreibung

Die Erfindung betrifft eine ringförmige Dichtung, wie sie im Oberbegriff des Patentanspruchs 1 beschrieben ist.

Für obigen Zweck verwendbare Verbindungen müssen dicht und schmutzritzenfrei sein und bleiben, bruchbegünstigende Spannungen ausschliessen und gegenüber Chemikalien inert, hitzebeständig und duktil (d.h. deformierbar) sein.

Für zum Abdichten von planen Flächen verwendete Flachdichtungen sind flache Wellringdichtungen mit meist in einer PTFE-Hülle eingelegtem "Sandwich" aus metallischem Wellring und beidseitigen Auflagen aus Dichtungsplattenmaterial weit verbreitet. Der metallische Wellring gibt der Dichtung mechanische Festigkeit und erhöht die plastische Verformbarkeit, indem sich die Wellenberge des Wellrings an Stellen mit hoher Pressung stärker in die Auflageringe aus Dichtungsplattenmaterial eingraben. Aus diesem Verhalten resultiert ein gutes Luftspaltfüllvermögen z.B. bei verzogenen Flanschen, d.h. die Auflageflächen der zwei gegeneinander abzudichtenden Vorrichtungsteile müssen nicht völlig plan sein, um trotzdem befriedigend abgedichtet werden zu können.

Auf der andern Seite weisen solche Wellringdichtungen auch Nachteile auf. Weil die Teflonhülle bedingt durch die relativ lose Anordnung von Wellring und Dichtungsplattenmaterial und damit entstehenden Hohlräumen am inneren Randbereich der Teflonhülle vor allem bei Druckschwankungen dort leicht einreisst, können durch die Risse eindringende aggressive Stoffe den metallischen Wellring angreifen resp. teilweise auflösen. Der Wellring vor allem einer an ihrem äusseren Randbereich offenen Wellringdichtung kann aber auch durch von aussen oder Diffusion von innen auf ihn einwirkende aggressive Materialien geschädigt werden. Dies alles verursacht Leckagen, die durch Nachziehen der Dichtung nicht mehr behoben werden können. Ferner muss die Teflonaussenhülle in der Regel stark deformiert werden, um das Dichtungsplattenmaterial mit dem Wellring einlegen zu können. Dieses Umstülpverfahren lässt sich aber nur mit dünnwandigen und damit diffusionsanfälligen und reissempfindlichen Teflonaussenhüllen durchführen.

Eine andere Form einer Dichtung in Sandwich-Bauweise ist in US-A-3 977 709 beschrieben. In einer PTFE-Hülle mit im wesentlichen U-förmigem Querschnitt, die einen ringförmigen Kanal definiert, befindet sich ein ringförmiger Kern aus einem komprimierbaren Material, wie Asbest, Gummi, Neopren, Silikongummi etc. Auch bei dieser Form der Dichtung muss die Aussenhülle zum Einlegen des Kerns stark deformiert werden.

Verbindungssysteme für Rohrleitungen, Fittings und Apparate aus Glas sollen einen möglichst spannungsarmen Zusammenbau ihrer Einzelteile ermöglichen. Erreicht wird dies in der Regel durch die Verwendung von Kugel-Pfanne-Verbindungen, die ein geringes Auswinkeln der Bauteile ermöglichen. Zudem werden massive PTFE-Dichtungen in O-Ringform eingesetzt, welche die Auswinkelungsmäglichkeiten noch dadurch unterstützen, dass sie einseitig etwas stärker zusammengepresst werden können.

Die Rohrteile, Fittings und Apparatebauteile müssen mit verschiedenen Anschlussenden in Kugel-, Pfannen- oder Planausführung hergestellt werden. Dies schränkt die Kombinationsmöglichkeit bei komplizierten Bauteilen stark ein. Vorteilhaft wäre aber die Verwendung von Bauteilen, die innerhalb der gleichen Nennweite uneingeschränkt miteinander verbunden werden könnten. Für den Hersteller der Glasrohrteile bedeutet dies, dass er für die Weiterverarbeitung immer drei verschiedene Rohrenden auf Lager halten muss, und für den Benützer der Systeme, dass er für eine weitgehend freie Kombinationsmöglichkeit Übergagangsteile kaufen muss.

Die geschliffenen Dichtflächen weisen eine beträchtliche Festigkeitseinbusse auf. Insbesondere die Pfanne ist der Bruchgefahr ausgesetzt. Aufgerauhte Flächen lassen sich aber auch schlechter abdichten und reinigen als Flächen mit intakter Feuerhaut.

Die genannten Systeme lassen innerhalb des Dichtungsrings einen Spalt zwischen den Dichtungsflächen offen, der Produktablagerungen und damit auch die Korrosion begünstigt. Es kann sogar zu Undichtigkeiten kommen, weil der O-Ring korrosiv unterwandert wird oder weil Verkrustungen im Spalt ein weiteres Nachziehen nach Temperaturschwankungen verunmöglichen. CIP-Reinigungsverfahren (=chemical in place cleaning) können normalerweise nicht angewendet werden.

Ein weiterer Nachteil der bekannten Systeme besteht darin, dass die massiven PTFE-Dichtungsringe in der Wärme nachgeben, was beim Abkühlen zu Leckagen führt, sofern nicht federbelastete Schrauben eingesetzt werden. Das automatische Nachspannen hat dann aber zur Folge, dass sich die Bauteile verschieben und sogenannte Kompensatoren eingesetzt werden müssen.

Es ist nun Aufgabe der Erfindung, ein Dichtungs- resp. Verbindungssystem von Rohrglasteilen unter sich oder mit Flanschen aus andern Werkstoffen zu schaffen, die keine korrodierbaren Teile und keine der oben erwähnten Nachteile aufweist.

Gelöst wird die Aufgabe durch die im kennzeichnenden Teil des Patentanspruchs 1 erwähnten Merkmale. Bevorzugte Ausführungsformen der Erfindung ergeben sich aus den abhängigen Patentansprüchen.

Die äussere Form der erfindungsgemässen Dichtung lässt sich leicht variieren und den abzudichtenden Flächen anpassen. Es lassen sich damit plan/plan-, plan/Kugel-, plan/Pfanne-, Pfanne/Pfanne-, Pfanne/Kugel-, Kugel/Kugel-Flächen durch entsprechenden Aufbau der Dichtung auf einfache Art dicht verbinden. Ferner kann die erfindungsgemässe Dichtung in einer speziellen Ausführungsform auch bei planen Verbindungen eine gewisse Auswinkelbarkeit der Teile bewirken.

Allen Dichtungen sind eine formbare in ihrem äusseren Randbereich offene Aussenhülle aus einem gegenüber Chemikalien praktisch inerten Material und ein Dichtungskern aus mindestens einem federnden/elastischen Wickelpaket von aufgewickelten Faserbändern gemeinsam, wobei das Wickelpaket über den ganzen Einsatzbereich von -100°C bis 250°C elastisch bleibt und den Innenraum der Aussenhülle mindestens teilweise ausfüllt.

Die Aussenhülle der Dichtung besteht vorzugsweise aus PTFE resp. PTFE/TFM und enthält gegebenenfalls zusätzlich zum Wickelpaket einen Formteil aus einem Duroplast.

Der bisher unvermeidliche, produktseitige Spalt bei Verwendung der PTFE-O-Ringdichtungen wird dadurch vermieden, dass die neue Dichtung nicht oder nicht nur auf die äusseren Partien der abzudichtenden Flächen, sondern zumindest auf deren innerste dem Produkt zugewandte Partien wirkt.

Der Aufbau des Dichtungskerns wird im folgenden beispielshaft an einer Flachdichtung beschrieben, bei der in der Regel praktisch der ganze Innenraum der Aussenhülle mit dem Wickelpaket ausgefüllt ist. Analog wird das Wickelpaket auch bei anders geformten Aussenhüllen, welche z.B. zusätzlich Duroplast Formteile oder mehrere Wickelpakete enthalten, ausgebildet.

Eine Flachdichtung weist eine U-förmige Aussenhülle aus Kunststoff, insbesondere PTFE, auf. Der geschlossene innenliegende Randbereich der Aussenhülle weist einen annähernd senkrechten äusseren Abschluss auf. Die innere Wandung des innenliegenden Randbereiches ist annähernd halbkreisförmig ausgeformt, kann aber zwecks Erreichen der gewünschten Eigenschaften z.B. auch konisch oder rechteckig verlaufen. Vorteilhaft ist zwecks Erhöhung der Betriebssicherheit und Standzeit die Wandstärke des innenliegenden Randbereiches verstärkt ausgebildet. In diese Aussenhülle werden als Dichtungskern vorzugsweise PTFE imprägnierte Fasern, vorzugsweise textilverarbeiteten Fasern, insbesondere Glasfasern, hohlraumfrei eingebracht.

Der Dichtungskern kann anschliessend an die innere Wandung der Aussenhülle eine innenliegende PTFE-Weichmasse aufweisen, die ein ungesintertes PTFE-Dichtungsband, z.B. ein Gore- oder Gaflon-Dichtungsband oder ein handelsübliches Gewindedichtungsband auf PTFE-Basis, als Dämmschicht gegen eindringende Chemikalien enthält. Durch den Wickelvorgang und das anschliessende Verdichten durch Druckausübung auf das gewickelte Dichtungsband wird das PTFE-Dichtungsband zu einer kompakten Masse verformt. Die plastische PTFE-Weichmasse wirkt gleichzeitig als Druckmedium zur durchgehenden Anpressung der Aussenhülle an die Dichtflächen der Flanschen. Auf diese Weise wird die Deformation der Aussenhülle bei Druckschwankungen und das Auftreten von Rissen in der Aussenhülle verhindert. Die PTFE-Weichmasse verhindert zudem bei einer etwaigen Verletzung der Aussenhülle die Verunreinigung z.B. des Rohrleitungs- oder Kesselinhalts mit Glasfasern der Dichtung.

Anschliessend an die PTFE-Weichmasse kann der Dichtungskern ein inneres Wickelpaket aus geflochtenem oder gewobenem Glasfasergeflechtsband, das vorzugsweise zumindest teilweise, d.h. abschnittsweise, mit PTFE imprägniert ist aufweisen. Nicht mit PTFE imprägniertes Glasfasergeflechtsband führt zu duktileren Dichtungen, jedoch weisen diese nur noch beschränkte Notdichtungseigenschaften auf. Die einzelnen Windungen dieses inneren Wickelpakets werden beim Einbringen in die Aussenhülle vorzugsweise miteinander verklebt. Dazu kann man z.B. Schnellkleber basierend auf Cyanacrylaten oder Wasserglas (Na, Ka) verwenden, die man punktuell auf das innere Wickelpaket aufbringt, oder Doppelklebbänder, die man auf das Glasfasergeflechtsband auflaminiert. Durch diese Verfestigung des inneren Wickelpakets wird das Ausweichen der Dichtung nach innen verhindert, wenn die Flanschen festgezogen werden.

An das innere Wickelpaket kann sich eine zweite aussenliegende Schicht PTFE-Weichmasse anschliessen, die ähnlich oder gleich wie die innenliegende Schicht PTFE-Weichmasse aufgebaut ist, in ihrer Stärke jedoch verschieden sein kann, d.h. z.B. nur noch halb so viele Wicklungen aufweist wie die innenliegende Schicht. Diese Schicht sorgt bei Beschädigung der Aussenhülle für zusätzliche Dichtheit. Zudem dient sie auch als Hydraulikmedium, welche die Aussenhülle gleichmässig an die Dichtungsflächen anpresst. Selbst wenn die innere Schicht PTFE-Weichmasse schon zerstört sein sollte, wirkt diese aussenliegende Schicht PTFE-Weichmasse immer noch abdichtend.

Der restliche Hohlraum der Aussenhülle kann mit einem äusseren Wickelpaket aus Glasfasergeflechtsband, welches gleich, ähnlich oder verschieden vom inneren Wickelpaket aufgebaut sein kann, ausgefüllt werden. Dieses äussere Wickelpaket wird aussen durch eine Abdeckung aus hochreissfesten Fasergewebebändern oder einer andern Ausblassicherung (z.B. einem Metallspannring) zusammengehalten. Die Abdeckung wirkt als unelastischer Fangring, der das Hinausdrücken des Dichtungskerns beim Anziehen verhindert. Abgedeckt werden können die Fasergewebestränge der Abdeckung durch ein in der Figur nicht gezeichnetes PTFE-Gewindeband. Es resultiert ein sauberer Abschluss, der z.B. beschriftet werden kann.

Die Wickelpakete verhalten sich beim Anziehen der Flanschen elastoplastisch. Die elastische Komponente resultiert aus der Verbiegung zahlloser kreuz und quer liegender feiner elastischer Glasfasern, welche beim Nachlassen der Verschraubungskraft (Duktilität der PTFE-Hülle) in ihre ursprüngliche Lage zurückkehren. Die plastische Komponente ist das Resultat der Knickung von über die Elastizitätsgrenze hinaus beanspruchten Glasfasern. Die daraus entstehenden Bruchstücke der Glasfasern werden mobil und "fliessen" innert kurzer Zeit, d.h. innert Minuten bis zu Stunden, je nach aufgegebener Pressung und vorhandener Flanschdeformation, zusammen mit dem Imprägniermittel PTFE an Stellen innerhalb der Aussenhülle hin, die weniger stark zusammengepresst sind. Diese "Fliess"-Bewegung spielt sich im mm- bis cm-Bereich ab. Zum plastischen Nachgeben der Dichtung trägt bei, dass die Aussenhülle, die mit bis zu 2,5 mm Dicke starkwandiger als die Aussenhüllen gemäss dem Stand der Technik sein kann, an Stellen mit hoher Pressung dünner wird, was bei den nach dem Stand der Technik viel dünneren Aussenhüllen nicht möglich ist. Das Durchquetschen der Aussenhülle kommt bei der erfindungsgemässen Dichtung deshalb nicht vor; vielmehr dringen die gegebenenfalls grob strukturierten Wickelpakete in die PTFE-Oberfläche der Aussenhülle ein und verhindern dadurch das Wegquetschen der Aussenhülle. Eine noch grössere plastische Verformbarkeit wird erreicht, wenn die Aussenhülle O-Ring-Rippen oder kammartige Rippen aufweist.

Man kann nach Bedarf z.B. ohne weiteres die einzelnen Wickelpakete vergrössern, d.h. die Dämmzonen vergrössern, oder statt nur 1 oder 2 auch mehr solche Wickelpakete in die Aussenhülle hineinwickeln. Ferner kann man Fasergeflechtsbänder verschiedener Breiten verwenden, so dass die Aussenhülle in Bereichen von Wickelpaketen aus Fasergeflechtsbändern grösserer Breite als der innere Hohlraum der Aussenhülle nach aussen gepresst wird. Damit lässt sich die Flächenpressung variieren, z.B. erhöhen, so dass auf Anhieb eine verbesserte Dichtheit der abzudichtenden Flächen erreicht wird. Auch durch Erhöhung der PTFE-Weichmasse durch Verwendung eines breiteren PTFE-Dichtungsbandes lässt sich die Aussenhülle stärker nach aussen drücken, so dass an diesen Stellen eine bessere Abdichtung der Dichtflächen erreicht wird. Damit erhält man in etwa den gleichen Effekt, wie wenn man eine Aussenhülle mit O-Ring-Rippen verwendet.

Eine stärkere Pressung resp. erhöhte Dichtheit kann man auch durch die Verwendung von elastischen Rundschnurringen erreichen. Diese aus elastomeren Kunststoffen verschiedenen Härtegrads gefertigten Ringe mit z.B. rundem, ovalem oder quadratischem Querschnitt, der vorzugsweise grösser als der innere Hohlraum der Aussenhülle ist, werden z.B. alternativ oder kumulativ zu den Wickelpaketen resp. PTFE-Weichmasse in die Aussenhülle eingefügt und bilden in einer bevorzugten Ausführungsform Ausbuchtungen in der Aussenhülle zwecks stärkerer Pressung resp. erhöhter Dichtheit.

Analog kann man durch das Hineinwickeln in den inneren Hohlraum der Aussenhülle eines z.B. durch Applikation von Wärme selbstklebenden Elastomerbandes, das breiter als der innere Hohlraum der Aussenhülle ist, eine stärkere Pressung resp. erhöhte Dichtheit an den entsprechenden Ausbuchtungen der Aussenhülle erhalten.

Eine speziell für hohe Drücke geeignete Dichtung kann als Stabilisierungselemente Drahtgeflecht oder Kunststoffgeflechte aus z.B. Kevlar enthalten. Diese können alternativ zu den Wickelpaketen, d.h. ausserhalb der Dämmzonen, in den inneren Hohlraum der Aussenhülle hineingewickelt werden. Je nach den zu verkraftenden Drücken kann eines oder mehrere solcher Stabilisierungselemente in eine Aussenhülle gewickelt werden.

Die erfindungsgemässe Dichtung kann auf einfache Art hergestellt werden. Die einzelnen Schichten und Lagen der PTFE-Dichtungsbänder für die PTFE-Weichmasse und die Fasergeflechtsbänder für die Wickelpakete und gegebenenfalls Stabilisierungselemente werden im z.B. U- resp. V-förmigen Hohlraum der Aussenhülle von innen nach aussen schichtresp. lagenweise aufgewickelt. Gegebenenfalls wird der Wickelvorgang unterbrochen zwecks Einfügen eines oder mehrerer Rundschnurrings resp. -ringe. Eine besonders stabile Wicklung erhält man, wenn man ein Doppelklebband auf die Faserbänder auflaminiert, so dass die einzelnen Wicklungen dieses Verbunds dann aneinander haften bleiben. Bei V-förmigem Hohlraum der Aussenhülle können von innen nach aussen Fasergeflechtsbänder steigender Breite oder eine erhöhte Anzahl Fasergeflechtsbänder gleicher Breite nebeneinander in die Aussenhülle hineingewickelt werden. Bei Dichtungen, die hohen Drücken ausgesetzt werden, verstärkt man vorzugsweise den äusseren Randbereich mit einer Abdeckung aus mehreren Lagen eines hochreissfesten Fasergewebebandes.

Da man bei der Herstellung der Dichtung die Aussenhülle nicht mehr umstülpen muss, können darin keine der Sicherheit und Standzeit abträglichen Knicke entstehen.

Solchermassen gefertigte Dichtungen können für Drücke zwischen Vakuum bis ca. 50 bar Überdruck verwendet werden.

Auch hinsichtlich des Einbaus in Apparate, Grosskolonnen usw. gibt es erhebliche Vorteile gegenüber herkömmlichen Dichtungen. Da die Dichtungen hauptsächlich bedingt durch die starkwandige Aussenhülle relativ steif sind, können sie leicht zwischen den Flanschen eingeschoben werden. Die Dichtung passt sich dann den Flanschen elastoplastisch an, wodurch die Anpassungsarbeiten (Unterfüttern, Kunstharzmasse einpressen usw.) entfallen. Andererseits ist es möglich, die grösseren Dichtungen so weit zu deformieren, dass sie über Mannlochöffnungen ins Innere von Behältern gebracht und von innen in den Dichtungsspalt eingelegt werden können.

Die Standzeit der Dichtung wird durch die pralle Füllung der Aussenhülle mit dem Dichtungskern erhöht, wodurch das Walken der Aussenhülle bei Druckänderungen vermieden wird. Ferner verbessert auch die spanabhebende Herstellung der bis zu Durchmessern von ca. 2 m und mehr aufweisenden Aussenhülle aus Perfluorpolymeren, wie z.B. PFA (Perfluoralkoxy) oder PTFE-Legierungen, vorzugsweise in TFM-Qualität (druckfestere, diffusionsresistentere PTFE-Qualität), und deren gegenüber dem Stand der Technik gegebenenfalls höhere Wandstärke bis zu ca. 4 mm und die damit und mit dem Aufbau des Dichtungskern verbundene reduzierte Diffusion von Chemikalien die Standzeit der erfindungsgemässen Dichtungen. Durch die qualitative Verbesserung der erfindungsgemässen Dichtungen können diese gegebenenfalls auch wiederverwendet werden.

Bei stark verzogenen Flanschen können die Dichtungen mehrlagig ausgeführt werden, wodurch z.B. bei dreilagigen Dichtungen ein Luftspaltfüllvermögen von bis zu ca. 20 mm erreicht wird. Solche mehrlagigen Dichtungen eignen sich z.B. auch zum Ausrichten von Brüdenrohren oder Kolonnen auf abgekippten Apparatestutzen.

Falls die der Dichtung die Elastizität vermittelnden Fasern temperaturbeständig sind - was bei den vorzugsweise verwendeten Glasfasern der Fall ist -, wird die thermische Einsatzgrenze der Dichtung von der PTFE-Aussenhülle bestimmt, die in der Regel zwischen ca. -100°C bis +250°C beständig und somit auch einsetzbar ist.

Das plastische Nachgeben der Dichtung kann noch durch in den Figuren nicht gezeigte zusätzliche Hohlräume zwischen den einzelnen Wicklungen der verwendeten Glasfaserbänder oder durch Verwendung schlauchförmiger Glasfaserbänder innerhalb der Wickelpakete erhöht werden. Durch Anziehen der Flanschen werden diese zusätzlichen Hohlräume mit Fasermaterial aufgefüllt. Die Wirkung der Dämmzonen bleibt dabei dennoch in etwa erhalten.

Um die Zusammendrückbarkeit der Wickelpakete den Bedürfnissen anzupassen, d.h. zu erhöhen oder zu erniedrigen, können auch Schichten verschieden texturierter Glasfaserbänder in die Aussenhülle hineingewickelt werden, so dass z.B. jeweils eine Schicht eines Glasfaserbandes einer feinen Textur auf eine Schicht eines Glasfaserbandes gröberer Textur zu liegen kommt. Fein texturierte Glasfaserbänder sind weniger zusammendrückbar als grob texturierte, weil sich bei grob texturierten Glasfaserbändern zwischen den einzelnen Maschen grössere leicht zusammendrückbare Hohlräume bilden.

Den gleichen Effekt erhält man, wenn man wohl Glasfaserbänder gleichen Gewebes benutzt, diese aber nur zum Teil mit PTFE imprägniert. Die nicht oder nur schwach mit PTFE getränkten Glasfaserbänder zerbröseln beim Zusammendrücken leichter als die mit PTFE getränkten Glasfaserbänder. Die unterschiedlich getränkten Glasfaserbänder werden vorzugsweise mit einem Doppelklebband miteinander verklebt, bevor sie in die Aussenhülle hineingewickelt werden. Auf diese Art lassen sich Wickelpakete mit z.B. 2 getränkten und einem ungetränkten Glasfaserband oder umgekehrt, die z.B. durch Doppelklebbänder miteinander verklebt sind, herstellen. Es lassen sich aber auch mehrere Lagen solcher Doppel- resp. Mehrfachbänder hintereinander in die Aussenhülle hineinwickeln.

Wie schon weiter oben erklärt, kann man statt eines Schnellklebers zur Verfestigung der Wickelpakete, die vorzugsweise aus einzelnen Schichten aus Glasfasergeflechtsbändern bestehen, auch ein thermisch stabiles Doppelklebband benützen. Vorzugsweise wird ein solches Doppelklebband auf die eine Seite des Glasfasergeflechtsbandes auflaminiert und die Kombination aus Glasfasergeflechtsband und Doppelklebband dann in die Aussenhülle hineingewickelt. Diese Ausführungsart der Erfindung kann aus Stabilitätsgründen insbesondere bei dicken Dichtungen mit grossen Durchmessern von bis zu ca. 2 m von Vorteil sein, weil in solchen Fällen die Verklebung der Glasfaser-geflechtsbänder vorzugsweise stückweise erfolgt.

Als thermisch stabile Doppelklebbänder verwendet man vorzugsweise solche, die einen Transferkleber auf Acrylatbasis enthalten, wie z.B. das handelsübliche Scotch-Doppelklebband Isotac oder Tesa-Doppelklebband von Beiersdorf AG.

Ein grosser Vorteil der erfindungsgemässen Dichtungen besteht darin, dass - im Gegensatz zu herkömmlichen Dichtungen - durch sattes Anliegen der Aussenhülle an den Dichtflächen keine Winkel oder Hohlräume entstehen, in denen sich Schmutz festsetzen kann, der dann nur noch anlässlich einer Demontage der Dichtung entfernt werden kann. Zudem kann auch die Verwendung einer PTFE-Aussenhülle in TFM-Qualität den Reinigungsvorgang erleichtern, weil diese PTFE-Sorte eine sehr geringe Restporosität aufweist.

Die Zunahme der Betriebssicherheit der erfindungsgemässen Dichtung verglichen mit dem Stand der Technik erfolgt nebst der vorzugsweise dickeren PTFE-Aussenhülle insbesondere durch die verbesserten Notdichtungseigenschaften des Dichtungskerns, so dass auch mit beschädigter Aussenhülle nach weitergearbeitet werden kann, bis ein günstiger Zeitpunkt zum Auswechseln der Dichtung erreicht ist. Defekte Wellringdichtungen verlangen hingegen sofortiges Handeln, weil sie keine Notdichtungseigenschaften aufweisen und das weitere Anziehen der Flanschen bei defektem Wellring oder Hülle nichts nützt. Ferner entfällt die Gefahr einer statischen Aufladung.

Die erfindungsgemässen Dichtungen können zum Abdichten von Dichtflächen aus Email-Email, Glas-Email, Glas-Glas, Metall (wobei jeweils Edelstahl oder verbleiter Stahl o.ä. gemeint ist)-Glas, Metall-Metall, Email-Metall, Graphit-Email, d.h. Rohrleitungen und Apparate mit ungeschliffenen Dichtflächen, die ohne elastische Dichtungen nicht dauerhaft dicht zu bringen sind, verwendet werden. Durch die hervorragenden Dichtungseigenschaften der erfindungsgemässen Dichtungen schon bei geringem Anpressdruck ist insbesondere deren Verwendungsmöglichkeit für Glasdichtflächen hervorzuheben.

Nebst den oben hauptsächlich beschriebenen Flachdichtungen kann durch entsprechendes Ausformen der Aussenhülle auch jede andere Dichtungsform analog hergestellt werden.

Bei Rohrleitungen, Fittings und Apparaten aus Glas können die Rohrenden auf konvex geformte kugelige oder plane Teile reduziert werden. Damit entfällt die sphärisch geschliffenen oder gegebenenfalls auch feuerpolierte Pfanne als schwächstes, d.h. bruchgefährdetes Glied dieser Verbindungssysteme. Zur Verbindung der Rohrenden wird eine erfindungsgemässe Dichtung eingesetzt, deren Dichtflächen formmässig den kugeligen resp. planen Rohrenden angepasst sind. Verwendet man z.B. zwei konvex-kugelige Rohrenden, so ist die dazwischenliegende Dichtung beidseitig kugelig-konkav quasi als Doppelpfanne ausgebildet. Verwendet man z.B. ein planes und ein kugelig-konvexes Rohrende, so ist die Dichtung auf der einen Seite plan und auf der andern Seite kugelig-konkav geformt.

Die quasi als Doppelpfanne ausgebildete Aussenhülle der Dichtung ist geeignet, jeweils zwei konvex geformte Rohrenden aufzunehmen. Selbstverständlich kann die Aussenhülle auch einseitig plan und nur auf der andern Seite als Pfanne ausgebildet sein, so dass man ein planes und ein konvexes kugeliges Ende miteinander verbinden kann, oder auch vollständig plan sein, sofern man zwei plane Rohrenden miteinander verbinden will.

Bei Verwendung zweier kugeliger Rohrenden wird die Auswinkelbarkeit der Rohre gegenüber den bekannten Systemen stark erhöht. Zudem erlaubt die erfindungsgemässe Dichtung, die Toleranzen bei den Glasrohrteilen zu vergrössern.

Das Dichtungskonzept für zwei konvex-kugelige Rohrenden ergibt eine Eigenelastizität, die es ermöglicht, die Längenänderungen der Glasteile bei grossen Temperaturschwankungen durch die Dichtung aufnehmen zu lassen. Ferner werden Abweichungen von der Idealform der Kugelfläche ohne weiteres ausgeglichen, so dass üblicherweise auf der Bank geformte kugelige Rohrenden direkt verwendet werden können. Die belassene Feuerhaut bringt noch den Vorteil mit sich, dass beim glasbläserischen Verarbeiten selbst im dezentral gelegenen Atelier ein Bruch der Enden praktisch ausgeschlossen ist.

Da der Kraftaufwand zum einwandfreien Abdichten bei feuerpolierten Dichtflächen wesentlich geringer als bei geschliffenen Dichtflächen ist, ist es völlig unproblematisch, von der linien- bis gürtelförmigen O-Ringabdichtung (d.h. schmale Dichtung) zur flächigen Abdichtung (d.h. breite Dichtung) überzugehen. Ferner lässt die Verwendung von zwei kugelig-konvexen Rohrenden (Kugel/Kugel-Verbindung) bei der Montage das Ausrichten resp. Auswinkeln der Teile besser zu als eine Kugel/Pfanne-Verbindung gemäss dem Stand der Technik.

Die Aussenhülle weist für zwei konvex-kugelige Rohrenden einen annähernd V-förmigen Querschnitt mit zwei Schenkeln auf und enthält vorzugsweise zusätzlich mindestens eine Verstärkungsrippe, die sich radial gegen den äusseren Rand der Dichtung erstreckt. Die Verstärkungsrippen geben der Dichtung die notwendige Steifheit, so dass diese beim Abdichtungsvorgang nicht zu stark radial nach innen zusammengedrückt wird. Zudem erleichtern sie die Herstellung des Dichtungskerns, indem die Faserbänder zwischen die Verstärkungsrippen resp. zwischen Verstärkungsrippe und Aussenhülle eingewickelt werden können. Die Anzahl der Verstärkungsrippen hängt von der Grösse des Hohlraums zwischen den Schenkeln der Aussenhülle ab. Zur Verbesserung der Dichtheit der Dichtflächen, zur Verbesserung der Diffusionsresistenz gegenüber den verwendeten Chemikalien und damit zur Erhöhung der Betriebssicherheit und Standzeit, weist die Aussenhülle an ihrem Innenumfang einen ringsum verstärkten Bereich auf.

Will man ein konvex-kugeliges Rohrende mit einem planen Rohrende verbinden, wird der Winkel zwischen den Schenkeln entsprechend verkleinert, so dass man auf der Seite des planen Rohrendes quasi eine Flachdichtung erhält. Der Winkel zwischen den Schenkeln ergibt sich aus der Kugelform der Rohrenden gemäss DIN/ISO-Norm und beträgt in der Regel ca. zwischen 70-110°.

Bei Verbindung von zwei planen Rohrenden wird eine Flachdichtung verwendet, bei der die beiden Schenkel parallel und im Abstand zueinander verlaufen, so dass man eine annähernd U-förmige Dichtung erhält, deren innerer Bereich wie bei der Aussenhülle mit V-förmigem Querschnitt verstärkt ist.

Die Aussenhülle weist als Dichtungskern vorzugsweise die weiter oben bei den Flachdichtungen beschriebenen Wickelpakete auf.

Ein Vorteil der erfindungsgemässen Dichtung besteht in deren Variabilität im Aufbau. Man kann nach Bedarf z.B. ohne weiteres die einzelnen Wickelpakete vergrössern, d.h. die Dämmzonen vergrössern, oder statt nur 1 oder 2 auch mehr solche Wickelpakete in die Aussenhülle hineinwickeln.

Ferner kann man Fasergeflechtsbänder verschiedener Breiten verwenden, so dass die Aussenhülle in Bereichen von Wickelpaketen aus Fasergeflechtsbändern grösserer Breite als der innere Hohlraum der Aussenhülle nach aussen gepresst wird. Damit lässt sich die Flächenpressung im gewünschten Bereich der Dichtung variieren, z.B. erhöhen, so dass auf Anhieb eine verbesserte Dichtheit der abzudichtenden Flächen erreicht wird.

Bei V-förmiger Aussenhülle können von innen nach aussen Fasergeflechtsbänder steigender Breite oder eine erhöhte Anzahl Fasergeflechtsbänder gleicher Breite nebeneinander in die Aussenhülle hineingewickelt werden.

Mit der Erfindung lassen sich lassen sich plan/plan, plan/Kugel oder plan/Pfanne Rohrenden in geschliffenem Zustand oder mit belassener Feuerhaut beliebig mit einer als Gelenkverbindung ausgebildeten Dichtung miteinander verbinden.

Dabei übernimmt die Gelenkverbindung bei jeweils planen Rohrenden die Funktion der Kugel/Pfanne, bei plan/Kugel Rohrenden die Funktion der Pfanne und bei plan/Pfanne Rohrenden die Funktion der Kugel. Man erhält damit eine ausgezeichnet dichtende Verbindung mit hoher Auswinkelbarkeit der einzelnen Rohrenden.

Die Dichtung besteht aus einer Aussenhülle, vorzugsweise aus PTFE resp. PTFE/TFM, und aus einem Kern, der einen Teil aus federndem Material, der über den ganzen Einsatzbereich von -100°C bis 250°C elastisch bleibt, und einen Teil aus einem Duroplast, welcher der Gelenkverbindung jeweils entweder die Funktion als Pfanne oder Kugel verleiht, enthält.

Derjenige Bereich der Aussenhülle der Gelenkverbindung, welcher dem planen Rohrende anliegt, weist vorzugsweise einen Kragen zur Zentrierung der Gelenkdichtung auf und enthält an seiner inneren planen Fläche Faserbänder, insbesondere elastische Glasfaserbänder und gegebenenfalls eine Weichmasse, vorzugsweise aus PTFE, wodurch die Auswinkelbarkeit der Rohrenden um bis zu 1/2° und eine wärmebedingte Ausdehnungsmöglichkeit auch noch nach Einbau der Gelenkverbindung gewährleistet bleibt. Ferner wird damit eine bessere Abdichtung der Rohrenden und eine erhöhte Aufnahmefähigkeit von Unebenheiten nicht geschliffener Glasflansche ermöglicht.

Derjenige Bereich der Aussenhülle der Gelenkverbindung, welcher das andere Rohrende abdichten soll, ist je nach Bedarf mittels eines an seiner Innenfläche anliegenden vorgeformten Duroplastteils als Pfanne oder Kugel ausgeformt.

Werden zwei plane Rohrenden miteinander verbunden, so weist die eine Aussenhülle am einen Rohrende einen pfannenförmigen Bereich und die andere Aussenhülle am andern Rohrende einen dazu passenden kugelförmigen Bereich auf.

Wird ein planes Rohrende mit einem kugeligen Rohrende verbunden, so weist die erfindungsgemässe Aussenhülle einen pfannenförmigen Bereich auf.

Wird ein planes Rohrende mit einem pfannenförmigen Rohrende verbunden, so weist die erfindungsgemässe Aussenhülle einen kugeligen Bereich auf.

Die Aussenhülle mit einem kugeligen Bereich enthält vorzugsweise zusätzlich mindestens eine Verstärkungsrippe, die sich parallel zum planen Bereich der Aussenhülle gegen den äusseren Rand der Gelenkverbindung erstreckt. Die Verstärkungsrippen geben der Gelenkverbindung die notwendige Steifheit, so dass diese beim Abdichtungsvorgang nicht zu stark radial nach innen zusammengedrückt wird. Zudem erleichtern sie das Aufwickeln der Faserbänder zwischen die Verstärkungsrippe und Aussenhülle. Zur Verbesserung der Dichtheit der Dichtflächen, zur Verbesserung der Diffusionsresistenz gegenüber den verwendeten Chemikalien und damit zur Erhöhung der Betriebssicherheit und Standzeit, weist die Aussenhülle an ihrem Innenumfang vorzugsweise einen ringsum verstärkten Bereich auf.

Um die Auswinkelbarkeit zu begrenzen, weist der Duroplastteil mit kugeligem Bereich vorzugsweise eine ringsum laufenden Nase auf, an welcher die Dichtung resp. Verbindung des andern Rohrendes bei einer Auslenkung von grösser als ca. 3°anstösst.

Die Aussenhülle mit einem pfannenförmigen Bereich enthält als Kern einen Teil enthaltend Faserbänder und gegebenenfalls Weichmasse, wie sie weiter oben beschrieben wurden, und einen Teil eines Duroplastformteils, welcher der Aussenhülle die pfannenförmige Form im Dichtungsbereich mit dem kugeligen Rohrende oder der kugeligen Gelenkverbindung verleiht.

Die Abdichtung zwischen dem kugeligen und pfannenförmigen Teil der Gelenkverbindung erfolgt an einem schmalen ringsumlaufenden Bereich der Aussenhüllen, in welchem die kugelig und die pfannenförmig geformten Glenkverbindungsbereiche aneinander anliegen. Dadurch wird eine gute Abdichtung erreicht, weil der Flächendruck trotz relativ geringem Anpressdruck gross bleibt.

Derjenige Bereich der Aussenhülle der Gelenkverbindung, welcher dem planen Rohrende anliegt enthält an seiner inneren planen Fläche den elastischen resp. federnden Teil des Dichtungskerns aus vorzugsweise PTFE imprägnierten Faserbändern und gegebenenfalls PTFE-Weichmasse, wie sie schon weiter oben bei der Flachdichtung beschrieben worden sind.

Es können Duroplastformteil aus beliebigen geeigneten Duroplasten verwendet werden. Insbesondere kommen Diallylphthalat-Harze, Epoxid-Harze, Harnstoff-Formaldehyd-Harze, Melanin-Formaldehyd-Harze, Melanin-Phenol-Formaldehyd-Harze, Phenol-Formaldehyd-Harze und ungesättigte Polyesterharze in Frage.

Die Gelenkverbindung kann auf einfache Art hergestellt werden. Die einzelnen Schichten und Lagen der PTFE-Dichtungsbänder für die PTFE-Weichmasse und die Fasergeflechtsbänder für die Wickelpakete werden in die Aussenhülle von innen nach aussen schicht- resp. lagenweise aufgewickelt und der Duroplastteil eingepresst.

In die Aussenhülle können die Glasfaserbänder derart aufgewickelt werden, dass nur der innere Bereich des planen Teils der Gelenkverbindung durch hohen Flächendruck die Flächen abdichtet. Erreicht wird dies durch verstärktes Ausfüllen nur des inneren Bereichs des planen Teils der Aussenhülle mit Glasfaserbändern der gewünschten Breite. Auch sind Fluchtungskorrekturen in geringerem Masse durch einseitiges verstärktes Anziehen der Schrauben der Schellenringe möglich. Sind grössere Korrekturen nötig, kann man z.B. dickere Gelenkverbindungen oder "doppelte" Gelenkverbindungen mit zwei z.B. durch eine zusätzliche Verstärkungsrippe getrennte Glasfaserbänderwicklungen verwenden. Solche Gelenkverbindungen sind elastischer und lassen deshalb grössere Korrekturen zu.

Die Gelenkverbindung erlaubt, die Toleranzen bei den Glasrohrteilen zu vergrössern und ergibt eine Eigenelastizität, die es ermöglicht, die Längenänderungen der Glasteile bei grossen Temperaturschwankungen durch die Dichtung aufnehmen zu lassen. Ferner werden Abweichungen von der Idealform der Dichtungsflächen ohne weiteres ausgeglichen.

Die schon weiter oben bei den Dichtungen beschriebenen übrigen Vorteile treffen auch auf die Gelenkverbindung zu.

Zur Fixierung der Rohrenden mit der Dichtung resp. der Gelenkverbindung kann man herkömmliche Schellenringe und Beilagen verwenden. Vorzugsweise benützt man aber neuartige, leicht elastische tellerförmige Schellenringe mit separater Beilage oder zwecks Vereinfachung der Montage geteilte Schellenringe mit integrierter Beilage.

Die verwendeten neuartigen Beilagen für die leicht elastischen tellerförmigen Schellenringe bestehen aus einer zweiteiligen ringförmigen Manschette, deren beide halbringförmigen Teile mit einem vorzugsweise elastischen Scharnier verbunden sind. Das Scharnier besteht aus einem Streifen eines verleimten Metall/Kunststoff-Laminats, doch lässt sich die Scharnierfunktion auch mit andern Mitteln erreichen. Die beiden halbkreisförmigen Teile bestehen aus Metall, z.B. Aluminium, oder einem geegneten Kunststoff und weisen eine ringförmig verlaufende Ausnehmung am Innenumfang auf zur Aufnahme von Gewebefasern und/oder Gewebefaserbändern zwecks Polsterung resp. Zentrierung der Rohrenden resp. Fittings. Die Beilagen werden an ihren offenen Enden über die Rohrenden resp. Fittings gestülpt, an ihren offenen Enden leicht zusammengedrückt und mit wenig Kraft in die Öffnung in der Tellermitte des weiter unten beschriebenen Schellenrings gepresst. Beilage und Schellenring sind dabei vorzugsweise so ausgebildet, dass beide formschlüssig ineinander zu liegen kommen. Die durch den Laminatstreifen verursachte schwache radial wirkende Spannung reicht aus, Schellenring und Beilage miteinander zu verklemmen, und die Gewebefaserbänder in der Beilage halten in gespanntem, d.h. zusammengepresstem Zustand die Rohrenden resp. Fittings annähernd passgenau umfangen.

Die Beilagen werden immer dann verwendet, wenn eine Dichtfläche geschliffen werden musste. Dies kann sich vor allem auch dann für nötig erweisen, wenn man bei der glasbläserischen Verarbeitung Deformationern hinnehmen musste, die ein nachfolgendes Schleifen erforderlich macht.

Durch Verwendung der Beilagen werden die Verschraubungskräfte homogen in das Rohrende eingeleitet, weil diese im Gegensatz zum Stand der Technik sauber zentriert auf dem Rohrende sitzt. Als weitere Verbesserung weist die neuartige Beilage eine Polsterung auf, welche die gleichmässige und vollflächige Einleitung der Verschraubungskraft in das Rohrende gewährleistet.

Der elastische tellerförmige Schellenring besteht aus Metall, z.B. rostfreiem Stahl, oder Kunststoff und weist in der Tellermitte eine Öffnung auf, deren Kreisdurchmesser grösser als der Durchmesser des Rohrendes ist, und auf dem Tellerrand angeordnete Bohrungen zur Aufnahme der Schrauben. Der flache Tellerrand verhält sich leicht elastisch, wenn man die Schrauben anzieht. Da die Schrauben bei den erfindungsgemässen Schellenringen mit grösserer Kraft als üblich festgezogen werden können, ist durch die Elastizität des Tellerrandes gewährleistet, dass auch unterschiedlich stark festgezogene Schrauben die Rohrenden praktisch homogen belasten, oder die Dichtung einseitig belastende radial angreifende Kräfte ein gleichmässiges Kräftebild bei der Verschraubung ergeben.

Die Elastizität der Schellenringe wird zur Unterstützung der erfindungsgemässen Dichtung resp. Gelenkverbindung benötigt. Die neuen Dichtungen resp. Gelenkverbindungen verbessern nicht nur die Beweglichkeit der Bauteile im Einbauzustand, sondern bringen auch eine gewisse Beweglichkeit im Betrieb mit sich, indem die elastischen Dichtungen resp. Gelenkverbindungen z.B. bei Temperaturdifferenzen auftretende Lateral- und Radialbewegungen der Glasrohre ausgleichen können. Damit bei solchen Beanspruchungen keine Undichtigkeiten auftreten, muss für eine gewisse Elastizität der Verschraubungsgarnituren, d.h. der Schellenringe, gesorgt werden. Durch Verwendung des neuen elastischen tellerförmigen Schellenrings und der neuen Beilage wird eine optimale Krafteinleitung in das jeweilige Glasrohrende resp. Fitting gewährleistet.

Statt der bisher beschriebenenen Schellenringe und Beilage kann eine weitere Ausführungsart eines Schellenrings mit integrierter Beilage benützt werden, dessen Montage dadurch erleichtert ist, dass der Schellenring mit integrierter Beilage in zwei Hälften geteilt und dadurch leicht um die Rohrenden gelegt, zusammengesteckt und mit einem zweiten geteilten Schellenring mittels Sicherungsscheibe und Schraube verbunden werden kann.

Nachstehend wird die Erfindung anhand der Zeichnungen beispielshaft näher erläutert.
Dabei zeigen Fig.1-4 jeweils einen Schnitt durch eine spezielle Ausführungsform einer Flachdichtung.
Fig.5 zeigt einen Schnitt einer Kugel/Kugel-Dichtung.
Fig.6 zeigt einen Schnitt einer Dichtung Kugel/plan.
Fig.7 zeigt einen Schnitt einer Dichtung plan/plan.
Fig.8 zeigt einen Schnitt einer Kugel/Pfanne-Dichtung.
Fig.9 zeigt einen Schnitt einer Zentrierbeilage und eines Schellenrings.
Fig.10-13 zeigen einen Schnitt eines Gelenkverbindungspaars für 2 plane Rohrenden.
Fig.14 zeigt einen Schnitt einer Gelenkverbindung für ein planes und ein pfannenförmiges Rohrende.
Fig.15 zeigt einen Schnitt einer Gelenkverbindung für ein planes und ein kugeliges Rohrende.
Fig.16 zeigt eine Draufsicht auf einen geteilten Schellenring mit integrierter Beilage.
Fig.17 zeigt einen Schnitt durch einen geteilten Schellenring mit integrierter Beilage.

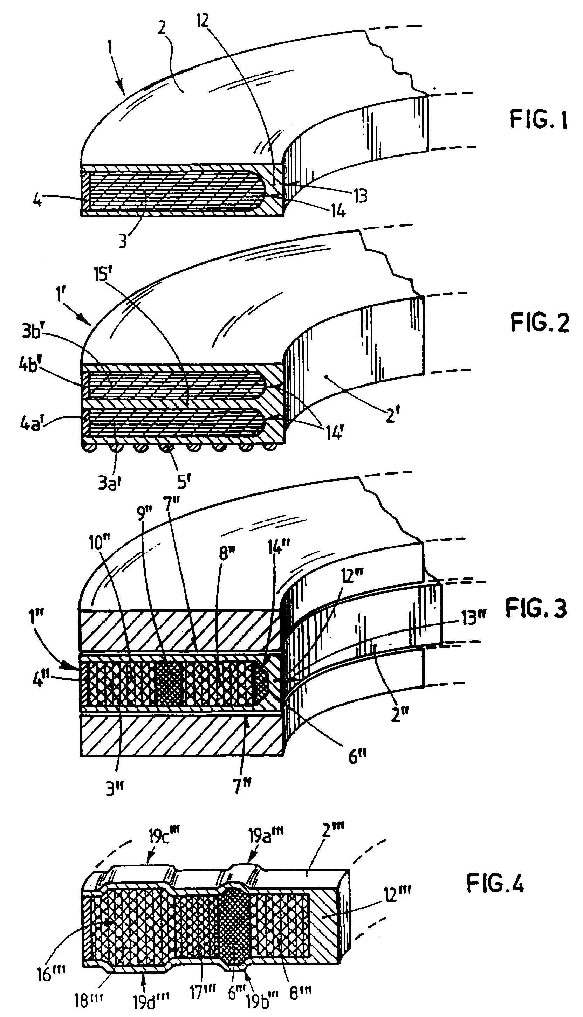

Die in Fig.1 gezeigte Dichtung (1) weist eine U-förmige Aussenhülle (2) aus Kunststoff, insbesondere PTFE, auf. Der geschlossene innenliegende Randbereich (12) der Aussenhülle (2) weist einen annähernd senkrechten äusseren Abschluss (13) auf. Die innere Wandung (14) des innenliegenden Randbereiches (12) ist annähernd halbkreisförmig ausgeformt, kann aber zwecks Erreichen der gewünschten Eigenschaften z.B. auch konisch oder rechteckig verlaufen. Vorteilhaft ist zwecks Erhöhung der Betriebssicherheit und Standzeit die Wandstärke des innenliegenden Randbereiches (12) verstärkt ausgebildet. In diese Aussenhülle (2) werden als Dichtungskern (3) vorzugsweise PTFE imprägnierte Fasern, vorzugsweise textilverarbeiteten Fasern, insbesondere Glasfasern, hohlraumfrei eingebracht. Mit einer Abdeckung (4) aus hochreissfestem Faserband aus vorzugsweise Fasergeweben oder auch einer andern Ausblassicherung (z.B. einem Metallspannring) wird das Herauspressen des Dichtungskerns (3) verhindert.

In Fig.2 wird eine weitere erfindungsgemässe Dichtung (1') gezeigt, die sich für stark verworfene Flanschen mit Planabweichungen bis zu 20 mm eignet. Sie weist hauptsächlich eine doppel-U-förmige Aussenhülle 2' mit zwei jeweils durch einen Steg (15') getrennten Dichtungskernen (3a' und 3b') aus PTFE getränkten Fasern und jeweils eine Abdeckung (4a' und 4b'), wie in Fig.1 beschrieben, auf. Die an der Aussenhülle (2') angeordneten O-Ring-Rippen (5') kommen vorzugsweise auf die abzudichtende Fläche, z.B. einen Flansch, mit Schadstellen (Kratzer, Aufrauhungen, Krater usw.) zu liegen.

Anhand der in Fig.3 beschriebenen erfindungsgemässen Dichtung (1'') sollen die Funktion und die Vorteile einer bevorzugten Ausführungsart des Dichtungskerns (3'') näher erläutert werden. Die U-förmige Aussenhülle (2'') besteht aus PTFE. Der geschlossene innenliegende Randbereich (12'') der Aussenhülle (2'') weist einen annähernd senkrechten äusseren Abschluss (13'') auf. Die innere Wandung (14'') verläuft konisch gegen den annähernd senkrechten äusseren Abschluss (13''). Zwecks Erhöhung der Betriebssicherheit und Standzeit ist die Wandstärke des innenliegenden Randbereiches (12'') in seinem konisch zulaufenden Teil und gegen den senkrechten äusseren Abschluss (13'') hin verstärkt ausgebildet. Der Dichtungskern (3'') enthält anschliessend an die innere Wandung (14'') eine innenliegende PTFE-Weichmasse (6'') enthaltend ein ungesintertes PTFE-Dichtungsband, z.B. ein Gore- oder Gaflon-Dichtungsband oder ein handelsübliches Gewindedichtungsband auf PTFE-Basis, als Dämmschicht gegen eindringende Chemikalien. Durch den Wickelvorgang und das anschliessende Verdichten durch Druckausübung auf das gewickelte Dichtungsband wird das PTFE-Dichtungsband zu einer kompakten Masse verformt. Die plastische PTFE-Weichmasse (6'') wirkt gleichzeitig als Druckmedium zur durchgehenden Anpressung der Aussenhülle (2'') an die Dichtflächen (7'') der Flanschen. Auf diese Weise wird die Deformation der Aussenhülle (2'') bei Druckschwankungen und das Auftreten von Rissen in der Aussenhülle (2'') verhindert. Die PTFE-Weichmasse (6'') verhindert zudem bei einer etwaigen Verletzung der Aussenhülle (2'') die Verunreinigung z.B. des Rohrleitungs- oder Kesselinhalts mit Glasfasern der Dichtung (1'').

Anschliessend an die PTFE-Weichmasse (6'') folgt ein inneres Wickelpaket (8'') aus geflochtenem oder gewobenem Glasfasergeflechtsband, das vorzugsweise zumindest teilweise, d.h. abschnittsweise, mit PTFE imprägniert ist. Dazu kann man z.B. käufliche PTFE-Dispersionen von Hoechst oder Dupont verwenden. Nicht mit PTFE imprägniertes Glasfasergeflechtsband führt zu duktileren Dichtungen (1''), jedoch weisen diese nur noch beschränkte Notdichtungseigenschaften auf. Die einzelnen Windungen dieses inneren Wickelpakets (8'') werden beim Einbringen in die Aussenhülle (2'') vorzugsweise miteinander verklebt. Dazu kann man z.B. Schnellkleber basierend auf Cyanacrylaten oder Wasserglas (Na, Ka) verwenden, die man punktuell auf das innere Wickelpaket (8'') aufbringt, oder Doppelkiebbänder, die man auf das Glasfasergeflechtsband auflaminiert. Durch diese Verfestigung des inneren Wickelpakets (8'') wird das Ausweichen der Dichtung (1'') nach innen verhindert, wenn die Flanschen festgezogen werden.

An das innere Wickelpaket (8'') schliesst sich eine zweite aussenliegende Schicht PTFE-Weichmasse (9'') an, die ähnlich oder gleich wie die innenliegende Schicht PTFE-Weichmasse (6'') aufgebaut ist, in ihrer Stärke jedoch verschieden sein kann, d.h. z.B. nur noch halb so viele Wicklungen aufweist wie die innenliegende Schicht. Diese Schicht sorgt bei Beschädigung der Aussenhülle (2'') für zusätzliche Dichtheit. Zudem dient sie auch als Hydraulikmedium, welche die Aussenhülle (2'') gleichmässig an die Dichtungsflächen (7'') anpresst. Selbst wenn die innere Schicht PTFE-Weichmasse (6'') schon zerstört sein sollte, wirkt diese aussenliegende Schicht PTFE-Weichmasse (9'') immer noch abdichtend.

Der restliche Hohlraum der Aussenhülle (2'') wird mit einem äusseren Wickelpaket (10'') aus Glasfasergeflechtsband, welches gleich, ähnlich oder verschieden vom inneren Wickelpaket (8'') aufgebaut sein kann, ausgefüllt. Dieses äussere Wickelpaket (10'') wird aussen durch eine Abdeckung (4'') aus hochreisstesten Fasergewebebändern zusammengehalten. Die Abdeckung (4'') wirkt als unelastischer Fangring, der das Hinausdrücken des Dichtungskerns (3'') beim Anziehen verhindert. Abgedeckt werden die Fasergewebestränge der Abdeckung (4'') durch ein in der Figur nicht gezeichnetes PTFE-Gewindeband. Es resultiert ein sauberer Abschluss, der z.B. beschriftet werden kann.

Die Wickelpakete (8'', 10'') verhalten sich beim Anziehen der Flanschen elastoplastisch. Die elastische Komponente resultiert aus der Verbiegung zahlloser kreuz und quer liegender feiner elastischer Glasfasern, welche beim Nachlassen der Verschraubungskraft (Duktilität der PTFE-Hülle) in ihre ursprüngliche Lage zurückkehren. Die plastische Komponente ist das Resultat der Knickung von über die Elastizitätsgrenze hinaus beanspruchten Glasfasern. Die daraus entstehenden Bruchstücke der Glasfasern werden mobil und "fliessen" innert kurzer Zeit, d.h. innert Minuten bis zu Stunden, je nach aufgegebener Pressung und vorhandener Flanschdeformation, zusammen mit dem Imprägniermittel PTFE an Stellen innerhalb der Aussenhülle (2'') hin, die weniger stark zusammengepresst sind. Diese "Fliess"-Bewegung spielt sich im mm- bis cm-Bereich ab. Zum plastischen Nachgeben der Dichtung (1'') trägt bei, dass die Aussenhülle (2''), die mit bis zu 2,5 mm Dicke starkwandiger als die Aussenhüllen gemäss dem Stand der Technik sein kann, an Stellen mit hoher Pressung dünner wird, was bei den nach dem Stand der Technik viel dünneren Aussenhüllen nicht möglich ist. Das bei den Wellringdichtungen (Aussenhülle ca. 1/2 mm dick) beobachtete Durchquetschen der Aussenhülle kommt bei der erfindungsgemässen Dichtung (1'') deshalb nicht vor; vielmehr dringen die gegebenenfalls grob strukturierten Wickelpakete (8'', 10'') in die PTFE-Oberfläche der Aussenhülle (2'') ein und verhindern dadurch das Wegquetschen der Aussenhülle (2''). Eine noch grössere plastische Verformbarkeit wird erreicht, wenn die Aussenhülle (2'') hier nicht gezeichnete O-Ring-Rippen, wie in Fig.2. gezeigt, oder kammartige Rippen aufweist.

In Fig.4 wird eine weitere Ausführungsform einer Dichtung (1''') gezeigt, in welcher der innenliegende Randbereich (12''') der Aussenhülle (2''') rechteckig ausgebildet ist. Anschliessend an ein inneres Wickelpaket (8''') aus Glasfasergeflechtsband einer bestimmten Breite folgt eine Schicht PTFE-Weichmasse (6''') aus einem PTFE-Dichtungsband, das breiter als der innere Hohlraum (16''') der Aussenhülle (2''') ist. Darauf folgen zwei Glasfaserwickelpakete (17''', 18''') verschiedener Breiten. Das innere Glasfasergeflechtsband (17''') weist dieselbe Breite wie das Glasfasergeflechtsband des inneren Wickelpakets (8''') auf und füllt den inneren Hohlraum (16''') der Aussenhülle (2''') aus, während das äussere Glasfasergeflechtsband (18''') breiter als der innere Hohlraum (16''') der Aussenhülle (2''') ist und diese deshalb stärker gegen die Flanschen drückt. Solche Dichtungen (1''') enthalten Bereiche stärkerer Pressung resp. erhöhter Dichtheit an den Stellen der Ausbuchtungen (19a-d''') der Aussenhülle (2''').

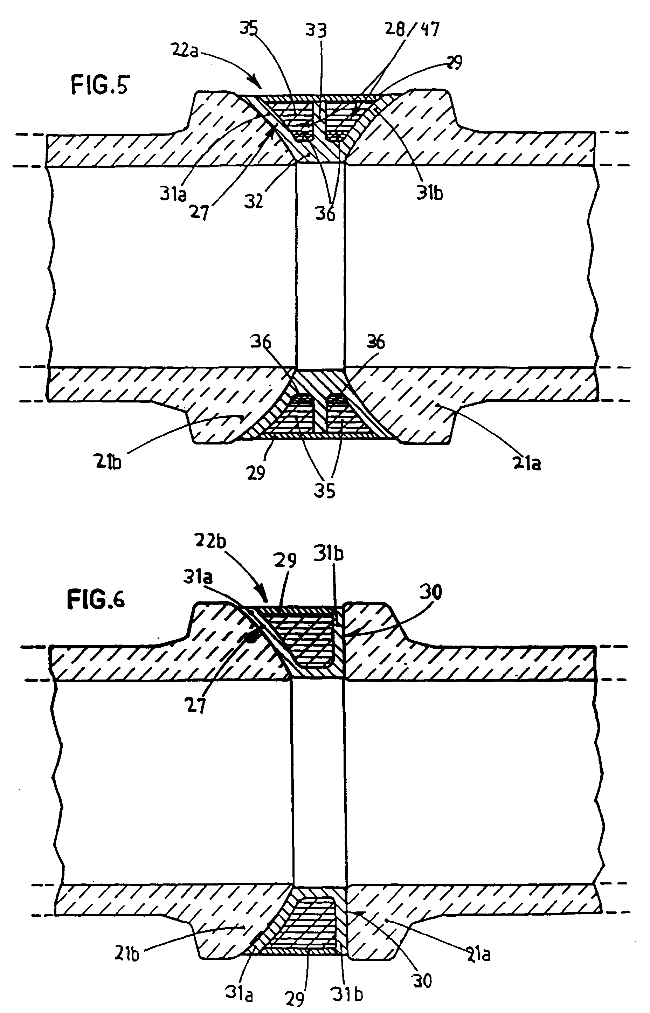

Die in Fig.5 gezeigte Dichtung (22a) besteht aus einer ringförmigen Aussenhülle (27), einem Dichtungskern (28) und einer Abdeckung (29). Die Aussenhülle (27) mit annähernd V-förmigem Querschnitt, die sich zum Abdichten von zwei konvex-kugeligen Rohrenden eignet, weist zwei unter einem durch die Form der Rohrenden vorgegebenen Winkel gespreizte Schenkel (31a, 31b) auf, die sich am Innenumfang der Dichtung (22a) treffen und dort zwecks besserer Dichtheit der Verbindung und erhöhter Standzeit einen ringsum verlaufenden verstärkten Bereich (32) aufweisen. Vom verstärkten inneren Bereich (32) der Dichtung (22a) ist radial nach aussen eine Verstärkungsrippe (33) ausgeformt, die der Dichtung (22a) mehr Stabilität verleiht und beim Verschrauben das zu starke Verformen des Dichtungskerns (28) verhindern soll. Der Dichtungskern (28) besteht aus Gewebefaserbändern (35), vorzugsweise PTFE getränkte Glasfaserbänder, und Lagen einer PTFE-Weichmasse (36), die zwischen den Schenkeln (31a, 31b) und der Verstärkungsrippe (33) in den von der Aussenhülle (27) gebildeten Hohlraum (47) hineingewickelt sind. Als äusserer Abschluss zur Verhinderung des Hinausdrückens des Dichtungskerns (28) wird die Abdeckung (29) aus einem hochreissfesten Fasergewebeband mit der Aussenhülle (27) und dem Dichtungskern (28) verklebt. Der in der Fig. nicht bezeichnete Winkel zwischen den Schenkeln (31a, 31b) kann durch Vergrössern resp. Verkleinern der Krümmungsradien der Rohrenden (21a, 21b) angepasst werden. Die Rohrenden (21a, 21b) und die Dichtung (22a) bilden dabei einen praktisch spaltfreien Übergang.

Die in Fig.6 gezeigte Dichtung (22b) ist ähnlich aufgebaut wie die in Fig.5 schon beschrieben Dichtung (22a). Das plane Rohrende (30) erfordert jedoch auf der einen Seite eine Flachdichtung. Der radial nach aussen zeigende Schenkel (31b) dichtet das plane Rohrende (30) ab, während der angewinkelte Schenkel (31a) in seiner Funktion als Pfanne das andere konvex-kugelige Rohrende (21b) abdichtet.

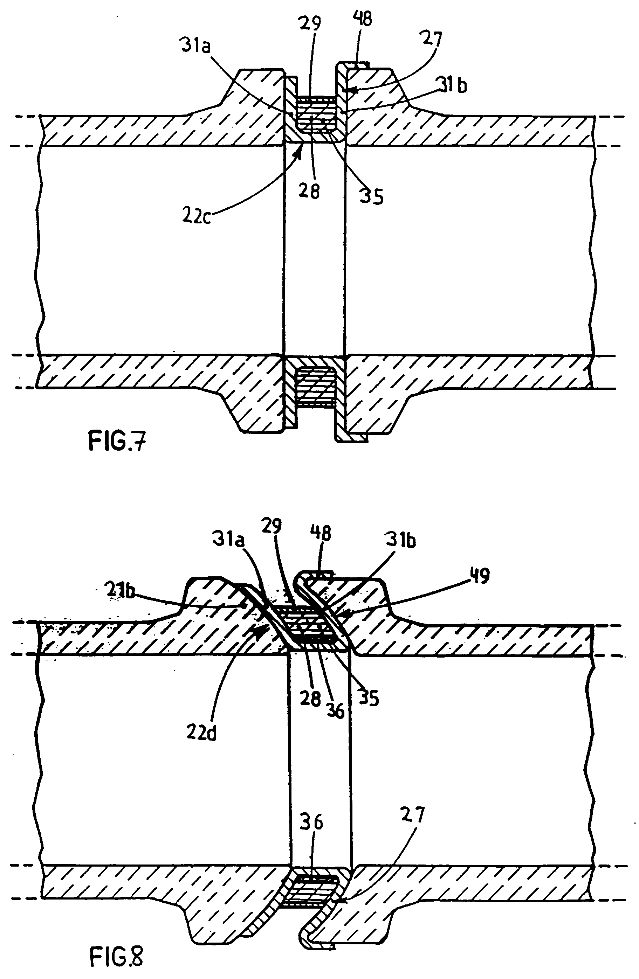

Die in Fig.7 gezeigte Dichtung (22c) entspricht einer Flachdichtung. Die U-förmige Aussenhülle (27) der Dichtung (22c) mit den zwei parallel zueinander im Abstand verlaufenden Schenkeln (31a, 31b) weist einen Zentrierkragen (48) am Schenkel (31b) auf, der das Einlegen der Dichtung (22c) erleichtern soll. Zudem ist die Aussenhülle (27) nur etwa bis zur Hälfte von innen nach aussen mit Glasfaserbändern (35) aufgefüllt, um den Anpressdruck der Dichtung (22c) am Innenumfang der Dichtung zu erhöhen und damit die Abdichtung zu verbessern.

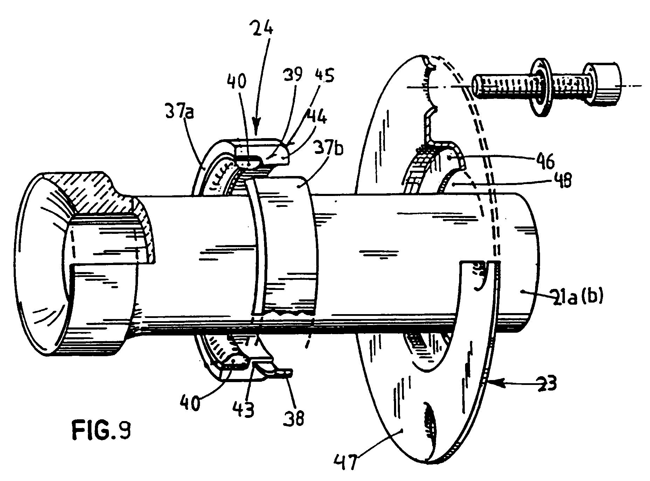

Die in Fig.8 gezeigte Dichtung (22d) wird in der Hauptsache zur Verbindung von Pfannenrohrenden (49) fremder Verbindungssysteme mit erfindungsgemässen konvex-kugeligen Rohrenden (21b) verwendet. Sie weist zwei in die gleiche Richtung abgewinkelte Schenkel (31a, 31b) auf, die flächig zwischen den beiden Rohrenden (21b, 49) aufzuliegen kommen. Der pfannenseitige Schenkel (31b) weist einen Zentrierkragen (48) auf, der das Montieren und Zentrieren der Dichtung (22d) erleichtert. Der Dichtungskern (28) enthält eine innenliegende Schicht (36) einer PTFE-Weichmasse und aussenliegende Lagen von Glasfaserbändern (35). Die Aussenhülle (27) ist damit von innen nach aussen nur bis etwa zur Hälfte gefüllt, um den Anpressdruck im Bereich des inneren Umfangs der Dichtung (22d) zu erhöhen und die Sprengwirkung auf den Pfannenschliff im Aussenbereich desselben zu vermindern.

In Fig.9 wird eine bevorzugte Beilage (24) und ein bevorzugter Schellenring (23) gezeigt. Die Beilage (24) besteht aus zwei halbkreisförmigen Metall- oder Kunststoffteilen (37a, 37b) und einem Streifen eines Metall/Kunststoff-Laminats als Scharnier (38). Die beiden halbkreisförmigen Metall- oder Kunststoffteile (37a, 37b), die z.B. auch aus einem entsprechenden Kunststoff bestehen können, enthalten eine Schulter (39), auf der eine Polsterung (40) aus Fasergewebe, vorzugsweise Glasfasergewebe, zum Zentrieren und zur gleichmässigeren Krafteinleitung verklebt ist. Statt mit Glasfaserbändern lässt sich der gleiche Effekt auch mit einer leichter zu reinigenden Kunststoffmanschette erreichen. In die annähernd L-förmigen halbkreisförmigen Metall- oder Kunstsoffteile (37a, 37b) ist unterhalb der Schulter (39) an einem Ende eine kurze Nut (43) zur Aufnahme des Scharniers (38) eingelassen. Das Scharnier (38) ist jeweils endseitig in je einer Nut (43) mit den beiden halbkreisförmigen Metall- oder Kunststoffteilen (37a, 37b) verleimt. Der als Scharnier verwendete gerade Laminatstreifen dient zugleich als Feder und lässt die beiden halbkreisförmigen Metall- oder Kunststoffteile (37a, 37b) an ihrem freien Ende (44) auseinanderklaffen.

Die Form der halbkreisförmigen Metall- oder Kunststoffteile (37a, 37b) ist an der den Schellenringen (23) zugewandten Seite (45) leicht gerundet. Diese Form ist passgenau zur Vertiefung (46) in der Tellermitte des Schellenrings (23). Der vorzugsweise aus Metall, z.B. rostfreiem Stahl, oder leicht elastischem Kunststoff hergestellte Schellenring (23) ist tellerartig geformt, mit 4 Schraubenlöcher, die auf dem Tellerrand (47) symmetrisch verteilt sind, einer Vertiefung (46), in welche die eine Seite der Beilage (24) praktisch formschlüssig hineinpasst und einer Öffnung (48) in der Vertiefung (46), deren Lochkreisdurchmesser grösser als der Durchmesser des aufzunehmenden Rohrendes (21a, 21b) ist.

Die Montage des Verbindungssystems erfolgt auf einfache Art. Die Schellenringe (23) werden über die Rohrenden (21a, 21b) geschoben, die Beilagen (24) dann mit ihren offenen Enden (44) über die Rohrenden (21a, 21b) gestülpt, durch leichten Druck auf die freien Enden (44) und leichtes Hineinpressen in die Vertiefung (46) der Schellenringe (23) durch die Federwirkung des Scharniers (38) formschlüssig darin festgeklemmt, die passende Dichtung (22a-d) zwischen die Rohrenden (21a, 21b) hineingeschoben und die Schellenringverbindung mittels Schrauben und Muttern festgezogen.

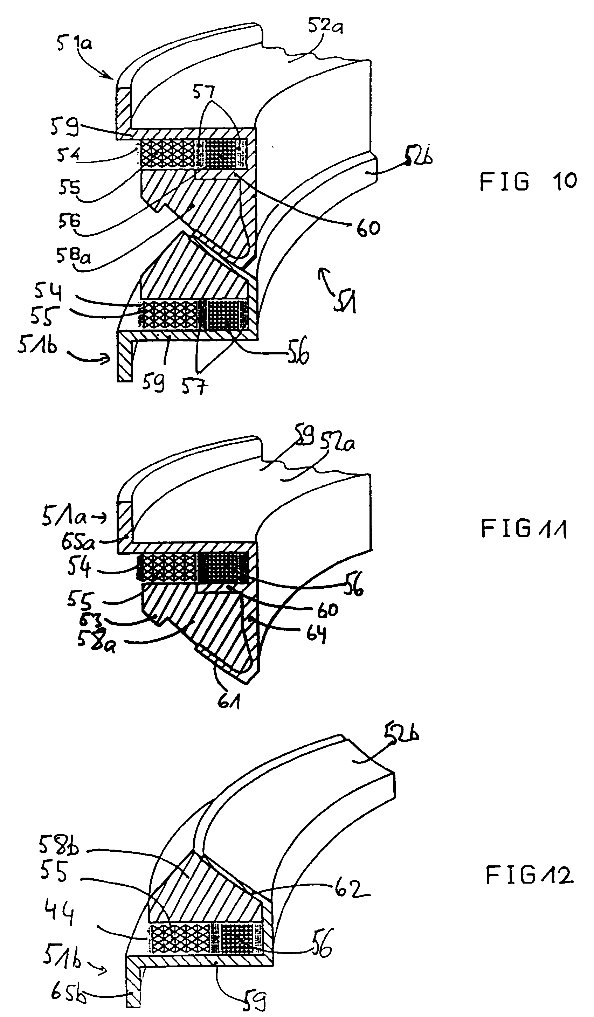

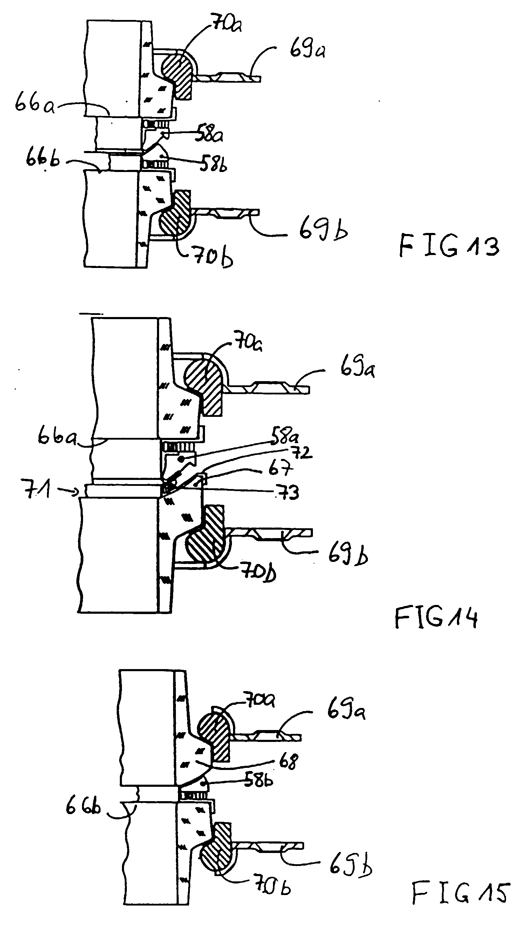

Das in den Fig.10-13 gezeigte Gelenkverbindungspaar (51) weist einen kugeligen (51a) und einen pfannenförmigen (51b) Teil auf. Beide Teile (51a, 51b) bestehen aus einer ringförmigen Aussenhülle (52a, 52b) und einem zweiteiligen Kern, der auf der einen Seite PTFE getränkte Glasfaserbänder verschieden dichter Wicklung (55, 56), Lagen einer PTFE-Weichmasse (57) und eine zugfesten Bandage (54) enthält, die anliegend an der planen Dichtfläche (59) der Aussenhülle (52a, 52b) zwischen diese und gegebenenfalls die Verstärkungsrippe (60) in die Aussenhülle (52a, (52b) hineingewickelt wurden. Auf der andern Seite enthält der zweiteilige Kern einen Duroplastformteil (58a, 58b). Der Duroplastteil (58a, 58b) dient dazu, dem Gelenkverbindungspaar (51) vermehrte Stabilität zu verleihen und den beiden ringsum laufenden Lippen (61, 62) der Aussenhüllen (52a, 52b), die der Abdichtung zwischen den beiden Rohrenden dienen, eine kugelförmige (61) resp. dazu passende pfannenförmige (62) Ausformung zu verleihen. Ferner weist der Duroplastformteil (58a) eine Nase (63) zur Begrenzung der Auswinkelbarkeit des Gelenkverbindungspaares (51) auf. Die Aussenhülle (52a) weist zur besseren Abdichtung an ihrem Innenumfang eine Verstärkung (64) auf. Beide Aussenhüllen (52a, 52b) weisen zur besseren Zentrierung der Gelenkverbindungsteile (51a, 51b) mit den Rohrenden zwei Zentrierkragen (65a, 65b) auf.

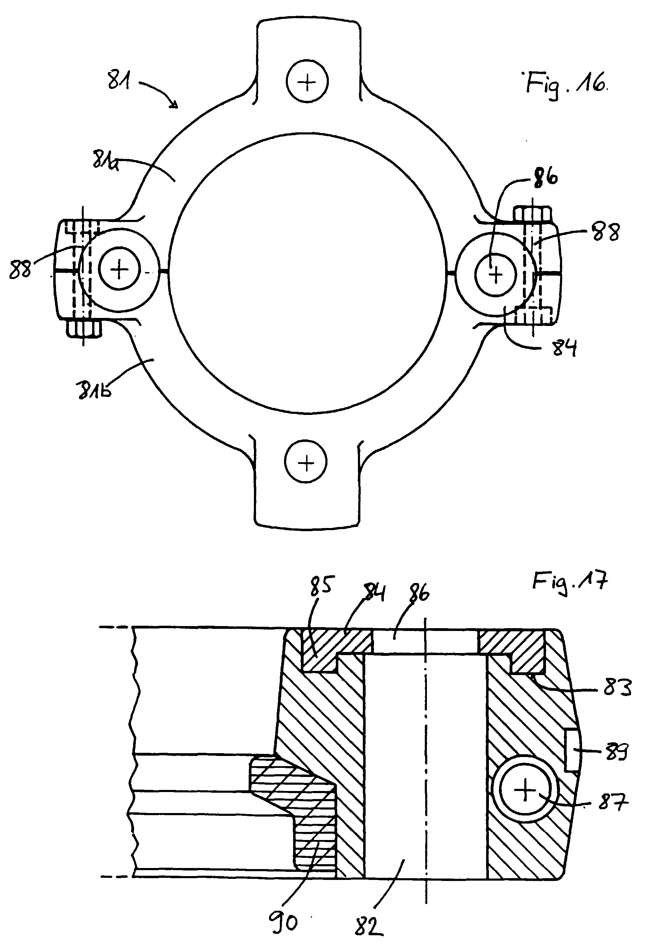

In den Fig.13, Fig.14 und Fig.15 sind Gelenkverbindungsteile (51a, 51b) für zwei plane Rohrenden (66a, 66b), für ein planes Rohrende (66a) mit einem pfannenförmigen Rohrende (67) und ein planes Rohrende (66a) und ein kugeliges Rohrende (68) dargestellt und zusätzlich dazu Schellenringe (69a, 69b) und Beilagen (70a, 70b) angedeutet.

Zur besseren Abdichtung und Auswinkelbarkeit für ein planes Rohrende (66a) mit einem pfannenförmigen Rohrende (67) wurde auf das pfannenförmigen Rohrende (67) eine Dichtung (71) mit Aussenhülle (72) aus Teflon und einem Kern (73) enthaltend hineingewickelte Glasfaserbänder eingesetzt, wobei die Aussenhülle (72) die pfannenförmige Form des Rohrendes (67) aufnimmt.

Bei der Verbindung eines planen Rohrendes (66a) mit einem kugeligen Rohrende (68) genügt es, wenn nur derjenige Teil (51b) der Gelenkverbindung verwendet wird, der eine pfannenförmige Ausformung aufweist.

Eine weitere Ausführungsart eines geteilten Schellenrings mit integrierter Beilage (81) ist in Fig.16 und Fig.17 beschrieben. Der Schellenring mit integrierter Beilage (81) besteht aus zwei Hälften (81a, 81b). Die beiden Hälften (81a, 81b) sind praktisch identisch. An beiden Enden jeder Hälfte (81a, 81b) eines Schellenrings mit integrierter Beilage (81) befindet sich die Hälfte einer Bohrung (82) zur Aufnahme einer Schraube zwecks Verbinden mit einem weiteren Schellenring mit integrierter Beilage (81). Ferner enthält jede Hälfte (81a, 81b) eine Einlassung (83) für eine Unterlagscheibe, die als Verbindungsteil (84) für die beiden Hälften (81a, 81b) dient. Das Verbindungsteil (84) kann je nach Form der Einlassung (83) z.B. konisch verlaufen oder wie in Fig.17 einen Absatz (85) aufweisen. Zweck des Verbindungsteils (84) ist es, jeweils 2 Hälften (81a, 81b) eines Schellenrings mit integrierter Beilage (81) durch Druckauswirkung bei der Verschraubung mit einem weiteren Schellenring mit integrierter Beilage (81) zu fixieren. Der Durchmesser der Bohrung (86) des Verbindungsteils (84) ist kleiner als die Bohrung der beiden Hälften (81a, 81b), so dass das Verbindungsteil (84) zusätzlich zu seiner Verbindungsfunktion auch die in der Fig. nicht gezeigte Schraube zur Verbindung von zwei Schellenringen mit integrierter Beilage (81) führt und zentriert. Zwecks provisorischen Zusammensteckens der beiden Hälften (81a, 81b) weisen diese eine Bohrung (87) für die Hilfsverschraubung mit einer angedeuteten Schraube (88) auf. Selbstverständlich wären auch andere Mechanismen möglich, wie z.B. Steck- resp. Clipverbindungen, und man könnte sich auch vorstellen, dass auf Hilfsbohrungen verzichtet werden könnte, indem man die für die Montage benötigte Hilfsfixierung der beiden Teile durch aussenliegende Hilfsverbindungen ersetzt.

Der gezeigte Schellenring kann aus temperaturbeständigem herkömmlich verwendeten Kunststoff oder Metall gefertigt sein. Das Verbindungsteil (84) besteht vorzugsweise aus einem hochfesten Kunststoff oder Metall und dient zusätzlich der besseren Druckverteilung auf dem Schellenring. Weitere Unterlagscheiben können auf den andern Bohrungen im Schellenring zum gleichen zusätzlichen Zweck verwendet werden. Ferner kann jede Hälfte (81a, 81b) eines Schellenrings mit integrierter Beilage (81) eine Aussparung (89) zur besseren Trennung der beiden Hälften (81a, 81b) nach Gebrauch aufweisen.

Die Polsterung des Schellenrings mit integrierter Beilage (81) gegenüber den Rohrenden erfolgt durch eine mit dem Schellenring verklebte Beilage (90), die ein Fasergewebe, vorzugsweise ein Glasfasergewebe, zum Zentrieren und zur gleichmässigen Krafteinleitung aufweist. Der gleiche Effekt lässt sich auch mit einer Kunststoffmanschette erreichen.

Der Schellenring mit integrierter Beilage (81) kann leicht an Rohrenden, Fittings, Apparaten fixiert werden, weil er nicht über das jeweilige Rohrende etc. gestülpt werden muss, sondern weil die beiden Hälften (81a, 81b) um das Rohr gelegt und durch die Hilfsfixierung provisorisch verbunden werden können. Nach Einlegen des Verbindungsteils (84) in die beiden Einlassungen (83) der Hälften (81a, 81b) können zwei Schellenringe mit integrierter Beilage (81) wie üblich verschraubt werden, wobei die Verbindungsteile (84) jeweils die beim Verschrauben auftretenden horizontal auseinanderstrebenden Kräfte der beiden Hälften (81a, 81b) aufnehmen.

## Patentansprüche

1. Ringförmige Dichtung aus einer Aussenhülle mit einem gegen aussen offenen Hohlraum, die aus einem gegenüber Chemikalien inerten Material besteht und deren Innendurchmesser im wesentlichen dem Innendurchmesser des Innenrands der abzudichtenden Bauteile entspricht und mit einem Dichtungskern dadurch gekennzeichnet, dass der Dichtungskern zu einem Wickelpaket aufgewickelte Faserbänder enthält, die den Innenraum der Aussenhülle mindestens teilweise ausfüllen.

2. Dichtung nach Patentanspruch 1 dadurch gekennzeichnet, dass die Aussenhülle zumindest an ihrem innenliegenden Bereich einen verstärkten Bereich aufweist.

3. Dichtung nach Patentanspruch 1 oder 2, dadurch gekennzeichnet, dass der Dichtungskern zu einem Wickelpaket aufgewickelte Faserbänder enthält, die den Innenraum der Aussenhülle praktisch vollständig ausfüllen.

4. Dichtung nach einem der Patentansprüche 1-3, dadurch gekennzeichnet, dass die Aussenhülle aus einer PTFE-Legierung besteht und eine Wandstärke von bis zu 5 mm aufweist.

5. Dichtung nach einem der Patentansprüche 1-4, dadurch gekennzeichnet, dass die Faserbänder aus gewobenen oder geflochtenen Glasfaserbändern gegebenenfalls veschiedener Texturierung bestehen und/oder gegebenenfalls zumindest in einem Teilbereich mit PTFE imprägniert sind.

6. Dichtung nach einem der Patentansprüche 1-5, dadurch gekennzeichnet, dass auf die Faserbänder zumindest in Teilbereichen ein Doppelklebband auflaminiert ist.

7. Dichtung nach einem der Patentansprüche 1-6, dadurch gekennzeichnet, dass der Dichtungskern mindestens eine Lage einer PTFE-Weichmasse zwischen dem verstärkten innenliegenden Randbereich der Aussenhülle und dem Wickelpaket resp. dem innersten Wickelpaket oder zwischen zwei wickelpaketen des Dichtungskerns enthält.

8. Dichtung nach einem der Patentansprüche 1-7, dadurch gekennzeichnet, dass die Aussenhülle zwei Schenkel aufweist, die sich vom Innenrand der Aussenhülle gegen aussen unter einem vorgegebenen Winkel spreizen oder im Abstand zueinander annähernd parallel nach aussen verlaufen, so dass sich zwischen den Schenkeln ein nach aussen hin offener Hohlraum ergibt, und wobei der Dichtungskern zu einem Wickelpaket aufgewickelte Faserbänder enthält, die zumindest den inneren Teil des Hohlraums praktisch vollständig ausfüllen.

9. Dichtung nach einem der Patentansprüche 1-8, dadurch gekennzeichnet, dass im Hohlraum der Aussenhülle mindestens eine umlaufende Verstärkungsrippe angeordnet ist, die radial nach aussen gerichtet ist und sich vorzugsweise über den ganzen ringförmigen Hohlraum der Aussenhülle erstreckt.

10. Dichtung nach einem der Patentansprüche 1-9, dadurch gekennzeichnet, dass die Aussenhülle an einem ihrer Schenkel einen Zentrierkragen aufweist.

11. Dichtung nach einem der Patentansprüche 1-7 für die plan/plane, plan/kugelige und plan/pfannenförmige Verbindung von Rohren, Fittings und Apparaten, dadurch gekennzeichnet, dass sie eine Aussenhülle mit Dichtungslippe und einen zweiteiligen Dichtungskern enthält, der einerseits zu einem Wickelpaket aufgewickelte Glasfaserbänder und gegebenenfalls eine PTFE-Weichmasse, und andererseits einen Duroplastformteil enthält, welcher der Dichtungslippe eine leicht gewölbte Form verleiht, so dass die Gelenkverbindung als Pfanne resp. als Kugel zur Abdichtung gegenüber einer passenden kugeligen resp. pfannenförmigen Gelenkverbindung oder gegenüber passenden kugeligen resp. pfannenförmigen Rohrenden, Fittings oder Apparaten dient.

12. Dichtung nach Patentanspruch 11, dadurch gekennzeichnet, dass die Aussenhülle einen Zentrierkragen aufweist.

13. Dichtung nach Patentanspruch 11 oder 12, dadurch gekennzeichnet, dass die Aussenhülle der kugeligen Gelenkverbindung eine Verstärkungsrippe und/oder eine Verstärkung aufweist.

14. Dichtung nach einem der Patentansprüche 11-13, dadurch gekennzeichnet, dass der Duroplastformteil der kugeligen Gelenkverbindung eine Nase zur Begrenzung der Auswinkelbarkeit aufweist.

15. Dichtung nach einem der Patentansprüche 1-7, dadurch gekennzeichnet, dass die Dichtung eine Flachdichtung darstellt und ein- oder mehrlagig ausgeführt ist.

16. Dichtung nach einem der Patentansprüche 8-10, dadurch gekennzeichnet, dass sie sich zur Verbindung von zwei konvex-kugeligen, konvex-kugeligem/planem oder zwei planen feuerpolierten Rohrenden bei Rohren, Fittings und Apparaten aus Glas eignet.

17. Dichtung nach einem der Patentansprüche 11-14, dadurch gekennzeichnet, dass sie sich zum dichten Verbinden von beidseitig planen, einerseits planen und andererseits pfannenförmigen und einerseits planen und andererseits kugeligen Rohrenden, Fittings und Apparateteilen eignet.

18. Dichtung nach einem der Patentansprüche 1-17, enthaltend einen tellerähnlich geformten Schellenring, der von aussen nach innen einen Rand mit Bohrungen zur Aufnahme der Schrauben, an den Rand anschliessend eine Vertiefung zur Aufnahme der Beilage und in der Tellermitte eine Öffnung zur Aufnahme des Rohrendes aufweist.

19. Dichtung nach Patentanspruch 18, enthaltend eine Beilage aus zwei halbkreisförmigen, gepolsterten Teilen, die vorzugsweise formschlüssig in die Vertiefung des Schellenrings passen, wobei je an einem Ende der beiden halbkreisförmigen Teile ein elastisches Scharnier angeordnet ist, das vorzugsweise gleichzeitig als Feder zum Verklemmen der Beilage im Schellenring wirkt.

20. Dichtung nach einem der Patentansprüche 1-17, enthaltend einen an zwei gegenüberliegenden Bohrungen in zwei gleiche Hälften geteilten Schellenring mit innenliegenden Polsterung, mit einem Mittel zum provisorischen Fixieren beider Hälften bei der Montage und einer ringförmigen konisch zulaufenden oder mit Absatz versehenen Unterlagscheibe als Verbindungsteil für die geteilten Bohrungen der beiden Hälften.

21. Verfahren zur Herstellung einer Dichtung resp. Verbindung gemäss einem der Patentansprüche 1-17, dadurch gekennzeichnet, dass man in den Hohlraum einer vorgeformten Aussenhülle Faserbänder, insbesondere Glasfaserbänder, lagenweise zumindest teilweise hineinwickelt und damit zumindest teilweise den Hohlraum der Aussenhülle ausfüllt.

22. Verfahren gemäss Patentanspruch 18, dadurch gekennzeichnet, dass mit einem Doppelklebband laminierte und/oder mindestens in Teilbereichen mit PTFE imprägnierte gegebenenfalls lagenweise verschiedene Texturierung und/oder Breiten aufweisende Faserbänder hineingewickelt werden, und gegebenenfalls PTFE-Dichtungsbänder für die PTFE-Weichmasse gegebenenfalls verschiedener Breiten und/oder Elastomerbänder gegebenenfalls verschiedener Breiten in bedarfsgemässer Reihenfolge zumindest teilweise hineingewickelt werden, wobei man den Wickelvorgang gegebenenfalls zum Einfügen eines oder mehrerer Rundschnurrings resp. - ringe unterbricht.

23. Verwendung einer Dichtung gemäss einem der Patentansprüche 1-7 zum dichten Verbinden von Rohren, Fittings und Apparaten aus Glas, wobei die Rohrenden vorzugsweise aus konvex-kugeligem oder planem feuerpoliertem Glas geformt sind.

24. Verwendung einer Dichtung nach einem der Patentansprüche 11-14 für die Abdichtung von beidseitig planen, von einerseits planen und andererseits pfannenförmigen und von einerseits planen und andererseits kugeligen Rohrenden, Fittings und Apparateteilen.

## Claims

1. Ring-form seal consisting of an external envelope enclosing a hollow space which opens outwards; the said seal is made from a chemically inert material and its inner diameter basically corresponds to the inner diameter of the inner edge of the components to be sealed; the said seal has a core characterised in that said core has a coiled bundle of fibre strips which at least partially fills the hollow space within the external envelope.

2. Seal according to claim 1, characterised in that the external envelope has a reinforced zone at least in the inner area.

3. seal according to claim 1 or 2, characterised in that the core contains fibre strips coiled in a bundle which practically completely fill the hollow space within the external envelope.

4. Seal according to any one of the claims 1-3, characterised in that the external envelope is made of a PTFE alloy and has a wall thickness of up to 5 mm.

5. Seal according to any one of the claims 1-4, characterised in that the fibre strips consist of woven or braided glass fibres optionally with various textures and/or optionally at least partially are impregnated with PTFE.

6. Seal according to any one of the claims 1-5, characterised in that a double-side adhesive tape has been laminated onto at least a part of the fibre strips.

7. Seal according to any one of the claims 1-6, characterised in that the core contains at least one layer of PTFE pulp between the reinforced inner periphery of the external envelope and the coiled bundle resp. the innermost coiled bundle, or between two coiled bundles of the core.

8. Seal according to any one of the claims 1-7, characterised in that the external envelope has two lateral faces which spread outwards from the inner edge of the external envelope to a predetermined angle, or run outwards approximately parallel to each other, forming a hollow space between the faces which opens outwards; whereby the seal core contains fibre strips coiled in a bundle which practically completely fill at least the inner section of the hollow space.

9. Seal according to any one of the claims 1-8, characterised in that there is provided at least one circumferential reinforcing web in the hollow space within the external envelope, the web being radially oriented outwards and extending preferably over the entire annular hollow space within the external envelope.

10. Seal according to any one of the claims 1-9, characterised in that the external envelope has a centering collar on one of its lateral faces.

11. Seal according to any one of the claims 1-7 for the planar/planar, planar/spherical and planar/concave connection of pipes, fittings and equipment, characterised in that it contains an external envelope with a sealing lip and a two-part core which contains on the one side glass fibre strips coiled in a bundle and optionally a PTFE pulp, and on the other side a duroplastic form part which bestows a slightly convex form to the sealing lip; so that the joint serves as concave resp. as spherical link joint fitting into a corresponding spherical resp. concave link joint, or fitting into corresponding spherical resp. concave ends of pipes, fittings or equipment.

12. Seal according to claim 11, characterised in that the external envelope has a centering collar.

13. Seal according to claim 11 or 12, characterised in that the external envelope of the spherical link joint has a reinforcing web and/or a reinforcement.

14. Seal according to any one of the claims 11-13, characterised in that the duroplastic form part of the spherical link joint has a protrusion for limiting the arc of the lateral faces.

15. Seal according to any one of the claims 1-7, characterised in that said seal is a flat seal and is made as a single-layer or multi-layer seal.

16. Seal according to any one of the claims 8-10, characterised by its suitability for connecting two convex-spherical, convex-spherical/planar, or planar fire-polished ends of pipes, fittings and equipment made of glass.

17. Seal according to any one of the claims 11-14, characterised by its suitability for tightly connecting ends of pipes, fittings and equipment parts which are on both sides planar, planar on one side and concave on the other, or planar on one side and spherical on the other.

18. Seal according to any one of the claims 1-17, characterised in that said seal contains a dished ring-clip which from outside inwards has a collar with drillholes for receiving screws, the collar connecting with a recess for receiving the shim; an opening in the centre of the concavity for admitting the pipe end.

19. Seal according to claim 18, which includes a shim consisting of two semicircular cushioned sections which ideally fit snugly in the recess in the ring clip, whereby an elastic hinge is attached to each end of both semicircular parts which preferably simultaneously functions as a spring clip to hold the shim in the ring clip.

20. Seal according to any one of the claims 1-17, including a ring-clip divided into two equal halves at two facing drill holes with inner cushions, the ring-clip having means for temporarily fixing the two halves during assembly; whereby the seal includes a annular conical washer or an offset underlay washer as a connecting part for the threads of the two halves.

21. Process for the production of a seal resp. connection according to any one of the claims 1-17, characterised by at least partial coiling of fibre strips, particularly glass fibre strips, in layers into the hollow space of a preformed external envelope, thus at least partially filling the hollow space within the envelope.

22. Process according to claim 18, characterised in that fibre strips in coils are inserted, the strips being laminated with double-sided adhesive tape and/or at least partially impregnated with PTFE, optionally per layer with different textures and/or width; optionally PTFE sealing strips for the PTFE pulp, optionally of various widths, and/or elastomer strips, optionally of various widths, are at least partially inserted by winding, in an appropriate sequence, the winding procedure optionally being interrupted for the insertion of one or more round-section cord rings.

23. Use of seal according to any one of the claims 1-7, for tightly connecting of pipes, fittings and equipment made of glass, the pipes ends preferably being formed from convex-spherical or planar fire-polished glass.

24. Use of a seal according to any one of the claims 11-14, for sealing pipe ends, fittings and equipment parts which are on both ends planar, planar on one side and concave on the other, or planar on one side and spherical on the other.

## Revendications

1. Un joint annulaire composé d'une enveloppe extérieure avec une cavité ouverte vers l'extérieur, composé d'un matériau inerte aux produits chimiques et dont le diamètre intérieur correspond essentiellement au diamètre intérieur du bord intérieur de la pièce de construction à étancher et avec un noyau d'étanchéité, caractérisé en ce que ledit noyau d'étanchéité contient des rubans de fibres enroulés en un paquet, qui remplissent au moins partiellement l'intérieur de l'enveloppe extérieure.

2. Un joint selon la revendication 1, caractérisé en ce que l'enveloppe extérieure présente au moins dans la zone intérieure une zone renforcée.

3. Un joint selon la revendication 1 ou 2, caractérisé en ce que le noyau d'étanchéité contient des rubans de fibres enroulés en un paquet qui remplissent pratiquement entièrement l'intérieur de l'enveloppe extérieure.

4. Un joint selon l'une quelconque des revendications 1-3, caractérisé en ce que l'enveloppe extérieure est composée d'un alliage de PTFE et présente une épaisseur de la paroi allant jusqu'à 5 mm.

5. Un joint selon l'une quelconque des revendications 1-4, caractérisé en ce que les rubans de fibres sont composés de rubans de fibres de verre tissés ou tressés optionnellement de textures diverses et/ ou sont optionnellement imprégnés de PTFE au moins partiellement.

6. Un joint selon l'une quelconque des revendications 1-5, caractérisé en ce que les rubans de fibres sont laminés au moins partiellement avec une bande adhésive à double face.

7. Un joint selon l'une quelconque des revendications 1-6, caractérisé en ce que le noyau d'étanchéité contient au moins une couche d'une pâte tendre de PTFE entre la zone du bord intérieure renforcée de l'enveloppe extérieure et le paquet enroulé respectivement le centre intérieur du paquet enroulé ou entre les deux paquets enroulés du noyau d'étanchéité.

8. Un joint selon l'une quelconque des revendications 1-7, caractérisé en ce que l'enveloppe extérieure présente deux côtés qui s'écartent du bord intérieur de l'enveloppe extérieure vers l'extérieur avec un angle donné ou s'étendent à une distance approximativement parallèle vers l'extérieur de façon à ce qu'une cavité ouverte vers l'extérieur résulte entre les côtés, et où le noyau d'étanchéité comprend des rubans de fibres enroulés en un paquet qui remplissent pratiquement entièrement au moins la partie intérieure de la cavité.

9. Un joint selon l'une quelconque des revendications 1-8, caractérisé en ce qu'au moins une nervure de renforcement circulaire est disposée dans la cavité de l'enveloppe extérieure, ladite nervure s'orientant radialement vers l'extérieur et s'étendant de préférence sur la cavité annulaire entière de l'enveloppe extérieure.

10. Un joint selon l'une quelconque des revendications 1-9, caractérisé en ce que l'enveloppe extérieure présente un col de centrage sur un de ses côtés.

11. Un joint selon l'une quelconque des revendications 1-7 pour l'assemblage plan/plan, plan/sphéroïdal et plan/concave de tuyaux, raccords et d'appareillages, caractérisé en ce que ledit joint comporte une enveloppe extérieure avec une lèvre d'étanchéité et un noyau d'étanchéité en deux parties, qui contient d'une part des rubans de fibres de verre enroulés en un paquet et optionnellement une pâte tendre de PTFE, et d'autre part une pièce moulée en plastique thermodurcissable qui donne à la lèvre d'étanchéité une forme légèrement arquée, de façon à ce que l'assemblage articulé sous forme concave respectivement sphéroïdale serve pour l'étanchement par rapport à un assemblage articulé sous forme sphéroïdale respectivement concave correspondant ou par rapport à des bouts de tuyaux, des raccords ou des appareillages sous forme sphéroïdale respectivement concave correspondants.

12. Un joint selon la revendication 11, caractérisé en ce que l'enveloppe extérieure comprend un col de centrage.

13. Un joint selon la revendication 11 ou 12, caractérisé en ce que l'enveloppe extérieure de l'assemblage articulé sphéroïdal comprend une nervure de renforcement et/ ou un renforcement.

14. Un joint selon l'une quelconque des revendications 11-13, caractérisé en ce que la pièce moulée en plastique thermodurcissable de l'assemblage articulé sphéroïdal comprend un nez pour la limitation de l'angle que forment les côtés en s'écartant.

15. Un joint selon l'une quelconque des revendications 1-7, caractérisé en ce que le joint représente un joint plat et est réalisé en une seule couche ou en multicouche.

16. Un joint selon l'une quelconque des revendications 8-10, caractérisé en ce que ledit joint est apte à l'assemblage de deux bouts de tuyaux convexo-sphéroïdals, convexosphéroïdal/plan ou deux bouts de tuyaux plans polis au feu pour des tuyaux, raccords ou appareillages en verre.

17. Un joint selon l'une quelconque des revendications 11-14, caractérisé en ce que ledit joint est apte à l'assemblage étanche de bouts de tuyaux, raccords et parties d'appareillages plans des deux côtés, plan d'un côté et concave de l'autre et plan d'un côté et sphéroïdal de l'autre.

18. Un joint selon l'une quelconque des revendications 1-17, comprenant une bague de serrage semblable à une assiette qui présente un bord de l'extérieur vers l'intérieur avec des perçages pour le logement des vis, suivi par un creux pour le logement du supplément et au centre de la concavité une ouverture pour le logement du bout de tuyau.

19. Un joint selon la revendication 18, comprenant un supplément de deux parties hémicycliques rembourrées, qui de préférence s'ajustent bien dans le creux de la bague de serrage, où à chaque fois au bout des deux parties hémicycliques est placée une charnière élastique, qui agit en même temps comme ressort pour le coincement du supplément dans la bague de serrage.

20. Un joint selon l'une quelconque des revendications 1-17, comprenant une bague de serrage partagée en deux moitiés équivalentes à l'endroit de deux perçages opposés avec un rembourrage intérieur, avec un moyen pour la fixation provisoire des deux moitiés à l'assemblage et une rondelle annulaire conique ou avec un gradin comme pièce de raccordement pour les perçages partagés des deux moitiés.

21. Un procédé pour la fabrication d'un joint respectivement d'un assemblage selon l'une quelconque des revendications 1-17, caractérisé en ce que dans la cavité d'une enveloppe extérieure préformée sont insérés par enroulement au moins partiellement des rubans de fibres, particulièrement des rubans de fibres de verre en couches, et qui remplissent ainsi au moins partiellement la cavité de l'enveloppe extérieure.

22. Un procédé selon la revendication 18, caractérisé en ce que des rubans de fibres laminés avec une bande adhésive à double face et/ ou imprégnés de PTFE au moins dans des zones partielles, optionnellement avec diverses textures selon les couches et/ ou diverses largeurs sont insérés par enroulement, et optionnellement des rubans d'étanchéité PTFE pour la pâte tendre de PTFE optionnellement de largeurs diverses et/ ou des rubans d'élastomère optionnellement de largeurs diverses dans un ordre selon les besoins sont insérés par enroulement au moins partiellement, où le procédé d'enroulement est interrompu optionnellement pour l'insertion d'une ou de plusieurs bagues de corde circulaires.

23. L'utilisation d'un joint selon l'une quelconque des revendications 1-7 pour l'assemblage étanche de tuyaux, raccords et appareillages en verre, où les bouts de tuyaux sont formés de préférence en verre convexo-sphéroïdal ou plan, poli au feu.

24. L'utilisation d'un joint selon l'une quelconque des revendications 11-14 pour l'étanchement de bouts de tuyaux, de raccords et de pièces d'appareillages plans des deux côtés, plan d'un côté et concave de l'autre et plan d'un côté et sphéroïdal de l'autre.
